# EUROPEAN PATENT APPLICATION

(11) **EP 4 527 566 A1**
(43) Date of publication of application: **26.03.2025**
(21) Application number: 24793966.3
(22) Date of filing: 30.07.2024
(51) Int. Cl.: B25J 13/08, B25J 9/16, B25J 19/02, H01M 10/54

(54) **METHOD FOR DISASSEMBLING BATTERY COMPONENTS BY USING ROBOT, COMPUTING DEVICE IN WHICH SAME METHOD IS IMPLEMENTED, AND SYSTEM INCLUDING COMPUTING DEVICE**

(30) Priority: 02.08.2023 KR 20230100771; 20.09.2023 KR 20230125412; 26.10.2023 KR 20230144367; 29.11.2023 KR 20230169608
(71) Applicant: Thoth Inc., Daejeon 34121 (KR)
(72) Inventor: LEE, Sang Hyoung, Dobong-gu Seoul 01400 (KR); CHO, Nam Jun, Seongdong-gu Seoul 04717 (KR); KWON, Woo Young, Seongnam-si Gyeonggi-do 13503 (KR)
(74) Representative: Seymour-Pierce, Alexandra Isobel
(86) International application number: PCT/KR2024/011077
(87) International publication number: WO 2025/028979

(57) **Abstract**

According to one embodiment of the present disclosure, a method of operation of a robot system for controlling the operation of at least one robot device implemented to perform at least one task based on a control signal is provided, the method comprising: receiving a control signal; obtaining sensing data associated with a battery; identifying a location of a first fastening member fixing the first component based on the sensing data and setting the location as a first target location; determining a first trajectory for a first end effector to reach a first location corresponding to the first target location; controlling the first end effector to perform a fist task of dismantling the first fastening member from the battery at the first location; setting a second target location based on the sensing data and determining a second trajectory for a second end effector to reach a second location corresponding to the second target location; and controlling the second end effector to perform a second task of disconnecting the first component at the second location.

## Description

### [Technical Field]

The present disclosure pertains to a battery processing system. Specifically, the present disclosure describes a system for transporting, storing, pre-processing, and dismantling batteries.

### [Background Art]

As global interest in environmental sustainability has increased, the distribution of electric vehicles has expanded significantly. Consequently, the demand for batteries used in electric vehicles has surged. However, given that automotive batteries typically require replacement every 3 to 4 years, the amount of waste batteries has increased substantially.

This has led to a growing need for technology capable of safely dismantling batteries used in electric vehicles. To achieve safe dismantling, it is crucial to accurately diagnose the state/condition of the battery and discharge any remaining current within the battery.

Currently, the dismantling of various battery components is performed manually. Because the dismantling process requires a high level of expertise and precision.

### [Technical Problem]

The present disclosure provides a battery processing system.

The present disclosure can provide a battery storage method according to battery information.

The present disclosure can provide a method and system for automatically processing a battery using a robot device.

The present disclosure can provide a method for determining a battery processing process according to battery information.

The present disclosure can provide a learning method of an artificial intelligence engine for controlling a robot device and a robot control method using the learned artificial intelligence engine.

Meanwhile, the problems to be solved in the present disclosure are not limited to the problems described above, and problems that are not mentioned can be clearly understood by a person having ordinary knowledge in the technical field to which the invention included in the present disclosure belongs from this specification and the attached drawings.

### [Technical Solution]

According to one embodiment of the present disclosure, a method for operation of a robot system that controls the operation of at least one robot apparatus is provided. The method comprises: obtaining, by at least one processor in the robot system that communicates with at least one processing device, an instruction to control the robot apparatus to grip at least one connector in the processing device using an end effector; obtaining sensing data associated with the battery from at least one sensor; setting a location corresponding to at least one port connected to the battery as a target location based on the sensing data; determining a first trajectory for the end effector to reach a first location corresponding to the target location; and determining a second trajectory for connecting the at least one connector held by the end effector to the at least one port at the first location.

Also, according to one embodiment of the present disclosure, a method for operation of a robot system that controls the operation of at least one robot apparatus implemented to perform a task based on a control signal is provided. The method comprises: receiving, by at least one processor in the robot system, a control signal indicating that a first component of a battery is to be dismantled; obtaining sensing data associated with the battery from at least one sensor; identifying a location of a first fastening member fixing the first component based on the sensing data and setting the location as a first target location; determining a first trajectory for a first end effector to reach a first location corresponding to the first target location; controlling the first end effector to perform a fist task of dismantling the first fastening member from the battery at the first location; setting a second target location based on the sensing data and determining a second trajectory for a second end effector to reach a second location corresponding to the second target location; and controlling the second end effector to perform a second task of disconnecting the first component at the second location.

Also, according to one embodiment of the present disclosure, a robot system includes at least one power device, a first robot apparatus, a second robot apparatus, a first end effector, at least one sensor, an artificial intelligence model, and at least one processor and at least one processor is configured to: feed input data based on sensing data obtained from the at least one sensor to the artificial intelligence model; obtain at least one control value for the at least one power device based on output data obtained from at least one output layer of the artificial intelligence model; and determine a first trajectory for moving the first end effector, connected to the first robot apparatus, to a target location based on the at least one control value, characterized in that the first trajectory is determined by obtaining at least one dynamic parameter for each of a plurality of points along the path to the target location, considering the control of the second robot apparatus.
Also, according to one embodiment of the present disclosure, a method for operating a robot system that controls the operation of at least one robot apparatus implemented to perform a task based on a control signal is provided. The method comprises: receiving, by at least one processor in the robot system, a control signal which indicates to dismantle a first component of a battery; obtaining sensing data associated with the battery from at least one sensor; identifying a predetermined point on the battery based on sensing data; estimating a pose of the battery based on a locational relationship between the identified predetermined point and the at least one robot apparatus; adjusting a position of the at least one robot apparatus or the battery such that the locational relationship between the predetermined point and the at least one robot apparatus satisfies a predetermined criterion; identifying, based on sensing data, a position of at least one of a plurality of fastening members for securing the first component; determining a dismantling sequence for the plurality of fastening members, and identifying a position of a first fastening member among the plurality of fastening to set the first fastening member to a first target location, wherein if the first target location is not located within a work area of the at least one robot apparatus, the position of the battery is adjusted so that the first target location is located within the work area; determining a first trajectory for a first end effector to reach a first location corresponding to the first target location; controlling the first end effector to perform a first task of dismantling the first fastening member from the battery at the first location; setting a second target location based on sensing data and determining a second trajectory for a second end effector to reach a second location corresponding to the second target location; and controlling the second end effector to perform a second task of dismantling the first component at the second location.

The embodiments and effects of the present disclosure are not limited to those mentioned above. A better understanding of various embodiments and effects of the present disclosure may be gained by those skilled in the art with reference to the following detailed description and the accompanying drawings.

### [Advantageous Effects]

According to the present disclosure, a battery processing system that provides an optimized storage method based on battery information is provided.

Additionally, a method for efficiently processing a battery using a robot apparatus is provided.

The effects of the present invention are not limited to the effects described above, and effects not mentioned can be clearly understood by a person skilled in the art from this specification and the attached drawings.

### [Description of Drawings]

FIG. 1 is a diagram illustrating an example of a battery processing automation system 1 according to various embodiments.
FIG. 2 is a diagram illustrating a system for performing a battery processing automation system 1 according to various embodiments.
FIG 3 is a diagram describing a detailed configuration of an automation system based on a robot system according to various embodiments.
FIG 4 is a diagram illustrating a configuration of a battery transport and storage system according to various embodiments.
FIG 5 is a diagram illustrating a configuration of a battery pre-processing system according to various embodiments.
FIG 6 is a diagram illustrating an embodiment of a method for operating a robot system for controlling a robot apparatus according to various embodiments.
FIG 7 is a diagram illustrating a method for a processor to control a robot apparatus based on an artificial intelligence engine according to various embodiments.
FIGS 8 to 10 are diagrams illustrating a method for a battery processing system to connect and disconnect a battery diagnostic device and a battery by controlling a robot apparatus according to various embodiments.
FIG 11 is a diagram illustrating a method for a battery processing system to store a battery according to a battery diagnosis grade according to various embodiments.
FIG 12 is a diagram illustrating a method for a battery processing system to connect a battery discharger and a battery by controlling a robot apparatus according to various embodiments.
FIG. 13 is a diagram illustrating a configuration of a battery dismantle system according to various embodiments.
FIGS. 14 and 15 are diagrams illustrating an operating method of a robot system for dismantling a battery pack according to various embodiments.
FIG. 16 is a diagram illustrating an operating method of a robot system for dismantling an upper cover of a battery pack according to various embodiments.
FIG. 17 is a diagram illustrating an operating method of a robot system for dismantling a module of a battery pack according to various embodiments.
FIG. 18 is a diagram illustrating an operating method of a robot system for dismantling cells of a battery pack according to various embodiments.
FIG. 19 is a diagram illustrating a method of a battery processing system for storing parts dismantled from a battery pack according to various embodiments.
FIG. 20 is a flowchart illustrating a method for a battery processing system to dismantle multiple fastening members according to various embodiments.
FIG. 21 is a diagram illustrating a method for a battery processing system to dismantle multiple fastening members according to various embodiments.
FIG. 22 is a flowchart illustrating a method for a robot system to perform a task using a robot apparatus according to various embodiments.
FIG. 23 is a diagram illustrating a method of estimating and calibrating the pose of the battery based on the sensing data collected by the robot system according to various embodiments.
FIG. 24 is a diagram illustrating a method for a battery processing system to control multiple robot apparatus using an artificial intelligence engine according to various embodiments.
FIG. 25 is a flowchart illustrating an embodiment in which a battery processing system controls multiple robot apparatus using an artificial intelligence engine according to various embodiments.
FIG. 26 is a flowchart illustrating an embodiment in which a battery processing system controls multiple robot apparatus using an artificial intelligence engine according to various embodiments.
FIG. 27 is a diagram illustrating an embodiment where a battery processing system controls multiple robot apparatus using an artificial intelligence engine according to various embodiments.
FIG. 28 is a diagram illustrating an example of a working chamber implemented in a battery processing system according to various embodiments.
FIG. 29 is a diagram illustrating an internal configuration of the battery processing system according to various embodiments.

### [Modes of the Invention]

Hereinafter, the embodiments of the present disclosure will be described in detail with reference to the accompanying drawings. **In** describing the embodiments, technical details that are well-known to those skilled in the art and are not directly related to the present disclosure will be omitted. This is to clearly describe the subject matter of the present disclosure by omitting redundant descriptions.

The embodiments presented in this specification are intended to clearly describe the spirit of the present invention to those of ordinary skill in the relevant art. The present invention is not limited to the embodiments described herein, and the scope of the present invention should be interpreted to encompass modifications or variations that do not depart from its spirit of the present invention. The example embodiments provided herein serve to explain the principles of the invention and its various applications, thereby enabling those skilled in the art to utilize the invention and understand the embodiments with many modifications and variations.

Although the terminology used in this specification includes as general terms currently widely accepted for describing the functions in the present invention, interpretations of these terms may vary depending on the intentions of practitioners in the relevant field, precedents, or emerging technologies. **In** a case where a specific term is defined and used with different meanings, the specific meaning will be explicitly provided. Therefore, the terms used herein should be interpreted based on the substantive meaning and the overall context of this specification rather than their mere literal meaning.

The accompanying drawings are intended to easily describe the present invention, and the shapes depicted in the drawings may be exaggerated as necessary to aid understanding of the present invention. Thus, the scope of the present invention is not limited by the depictions in the drawings.

In cases where describing detailed configurations or functions known in relation to the present invention may make the subject matter ambiguous, such description will be omitted as necessary. Additionally, numerical designations (e.g., first, second) used in the description are merely symbols for differentiating one component from another component.

The suffixes "part," "module," and "unit" used for the components in this specification are provided for ease of writing and do not imply distinctive meaning, functions, or roles by themselves.

That is, the embodiments of the present disclosure are provided to make the present disclosure complete and to inform those skilled in the art of the scope of the present disclosure, and the invention of the present disclosure is defined only by the scope of the claims. Like reference numerals refer to like elements throughout the specification.

The terms "first" and/or "second" may be used to describe various elements, but the elements should not be limited by the terms. The terms are used only for the purpose of distinguishing one element from another, for example, without departing from the scope of rights according to the concept of the present disclosure, the first element may be named the second element, and similarly, the second element may also be named the first element.

It should be understood that when an element is described as being "connected" or "coupled" to another element, there may be intervening elements in between or it may be directly connected or coupled to the other element. On the other hand, when an element is described as being "directly connected" or "directly coupled" to another element, it should be understood that there are no intervening elements. Other expressions that describe the relationship between elements (i.e., "between" and "immediately between" or "neighboring to" and "directly neighboring to") should be interpreted similarly.

In the drawings, each block in the processing flowchart and combinations thereof may be executed by computer program instructions. These instructions may be embedded on a processor of a general-purpose computer, special-purpose computer, or other programmable data processing apparatus. The instructions executed through the processor create means for performing the functions described in the blocks of the flowchart. These instructions may be stored in a computer-usable or computer-readable memory to direct a computer or other programmable data processing apparatus to implement a function in a specific manner, thereby producing an article of manufacture containing instructions for performing the functions described. Furthermore, the instructions may be embedded in a computer or other programmable data processing apparatus and guide the execution of the functions by generating a computer-executed process through a series of operational steps.

Each block may represent a module, segment, or portion of code including one or more executable instructions designed to perform a specified logical function. It should be noted that in some embodiments, the functions mentioned in the blocks may occur in a different order than described. For example, two blocks shown in succession may be performed concurrently, simultaneously or in reverse order, depending on the functions they represent.

The term "unit" used in this specification refers to software or hardware components such as Field Programmable Gate Array (FPGA) or Application Specific Integrated Circuit (ASIC). The "unit" performs specific roles but is not limited to software or hardware. The "unit" may be configured to reside in an addressable storage medium or to reproduce one or more processors. Accordingly, in some embodiments, the "unit" includes components such as software components, object-oriented software components, class components, processes, functions, attributes, procedures, subroutines, segments of program code, drivers, firmware, microcode, circuits, data, databases, data structures, tables, arrays, and variables. The functions provided in the components and "units" may be combined into fewer components and "units," or it may be disseminated into additional components and "units." These components and "units" may be implemented to reproduce one or more CPUs within a device or a secure multimedia card. Additionally, according to various embodiments of the present disclosure, the "units" may include one or more processors.

Hereinafter, the operating principles of the present disclosure will be described in detail with reference to the accompanying drawings. When describing the present disclosure, detailed descriptions of related known functions or configurations will be omitted if their inclusion may obscure the subject matter. The terms described below are defined considering the functions of the present disclosure and may vary depending on the user, operator, or customary practices. Therefore, definitions should be given consistent with the description throughout this specification.

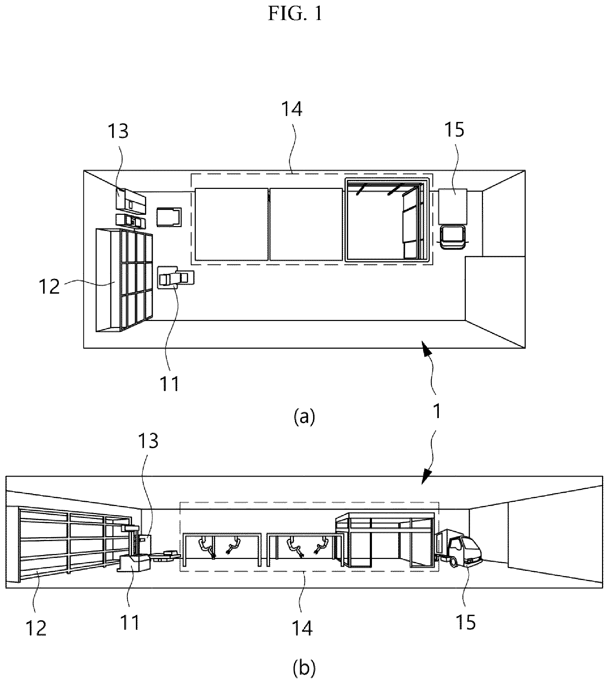

FIG. 1 depicts an implementation example of a battery processing automation system 1 according to various embodiments. FIG 1(a) is a top view of the battery processing automation system 1. FIG 1(b) is a panoramic view of the battery processing automation system 1.

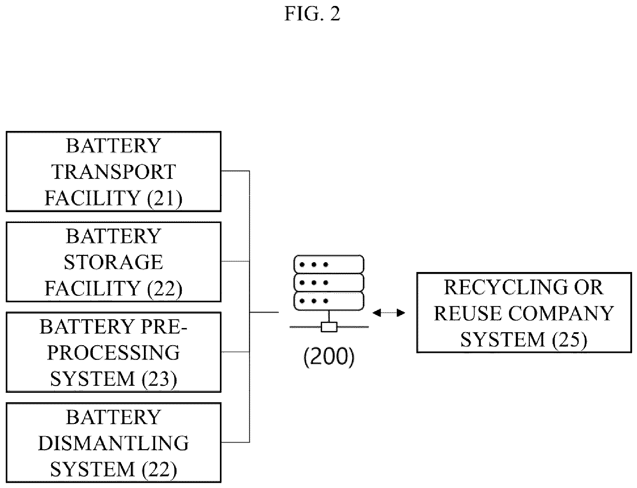

FIG. 2 illustrates systems for implementing a battery processing automation system 1 according to various embodiments.

Referring to FIGS 1 and 2, the battery processing automation system 1 includes multiple automation systems for physically or chemically processing the battery. Here, the battery is composed of one or more modules, with each module consisting of a plurality of cells. The waste battery pack may include components such an upper cover, a bolt (fastening member), a module, a cell, a cooling plate, and others. However, these are not exhaustive. In this disclosure, a battery may refer to a battery pack, an energy storage system (ESS), or a waste battery.

Specifically, as shown in FIG 1, the battery processing automation system 1 may include various automation facilities for battery processing. The facilities may include, but are not limited to, a battery transport facility 11, a battery storage facility 12, a battery pre-processing facility 13, a battery dismantling facility 14, and a battery unloading facility 15.

These facilities perform automated battery processing processes based on multiple automated systems. Specifically, these facilities may operate based on processing results (e.g., calculations, decisions, commands) from at least one computing device or electronic device equipped with an automated system.

For example, as depicted in FIG 2, a computing device 200 with at least one processor may control multiple automation systems. The battery processing automation system 1 may include a battery transport system 21 for automatically transporting a battery, a battery storage system 22 for automatically storing a battery, a battery pre-processing system 23 for automatically pre-processing a battery (e.g., diagnosing, charging, discharging, coolant removal), and a battery dismantling system 24 for automatically dismantling or disassembling a battery.

The computing device 200 may control the battery transport system 21 to move the battery to a designated location, the battery storage system 22 to store or take out the battery in a specified area, the battery pre-processing system 23 to preprocess the battery according to a predetermined method, and the battery dismantling system 24 to dismantle at least one component of the battery.

Additionally, the computing device 200 may cooperate with a recycling or reuse company system 25 to handle post-processing of the dismantled battery. For example, the computing device 200 may transport the dismantled battery to a waste battery recycling company for recycling or the reuse of the battery.

An example of a battery processing process using the battery processing automation system 1 is outlined as follows.

Referring to FIG 1(b), the transport facility 11 equipped with battery transport system may transport battery packs stored in the space where the battery processing automation system 1 is implemented to the storage facility 12 equipped with the battery storage system. In this case, the battery transported from the external company are unloaded and transported using the unloading facility 15 and the transport facility 11. The storage facility 12 stores the battery pack in a storage slot determined according to a predetermined criterion. The battery pack stored in the transport facility 11 or in the storage facility 12 may be took out and transported to the pre-processing facility 13 equipped with the battery pre-processing system. The pre-processing facility 13 may use at least one pre-processing device (e.g., diagnostic device, charger, discharger) to preprocess the battery pack. A mobile robot in the transport facility 11 may transport the pre-processed battery pack to the dismantling facility 14 equipped with the battery dismantling system. The dismantling facility 14 may dismantle the battery pack using at least one dismantling means (e.g., a cooperating robot). The dismantled battery may either be stored using the storage system or transported back to an external company.

The automation systems including the battery processing automation system 1 may be implemented based on the robot system and the computing device for controlling the robot system.

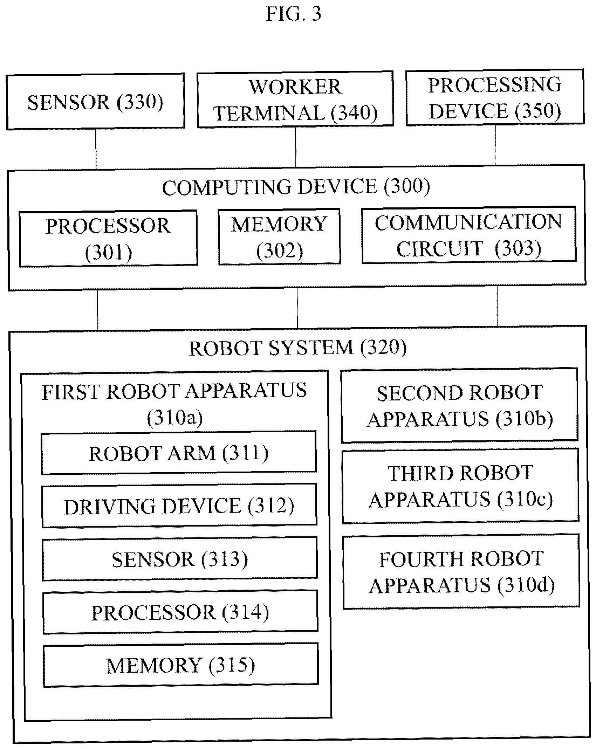

FIG 3 is a diagram describing a detailed configuration of an automation system based on a robot system according to various embodiments.

Referring to FIG 3, the battery processing automation system may include a robot system 320 including multiple robot apparatus and at least one computing device 300 for controlling the robot system 320. The computing device 300 may include, but is not limited to, a server device.

The computing device 300 may include a processor 301, a memory 302, a communication circuit 303, and other components that are obvious to those skilled in the art.

The processor 301 may include at least one processor with multiple functions. For instance, software (e.g., a program) may be executed to control at least one component (e.g., hardware or software) of the computing device connected to the processor 301, and it may handle various data processing or calculation.

According to one embodiment, during data processing or calculation, the processor 301 may store the command or data received from the other components in the memory 302 (e.g., volatile memory), process the command or data stored in the volatile memory, and store the results in the non-volatile memory. The processor 301 may include a main processor (e.g., central processing device or application processor) or an auxiliary processor (e.g., neural processing unit (NPU), an image signal processor, a sensor hub processor, or a communication processor), which may operate independently or together. For example, the auxiliary processor may be set to use lower power than the main processor or to be specific to a specified function. The auxiliary processor may operate independently or together with the main processor. For example, the auxiliary processor may operate when the main processor is in an inactive state (e.g., sleep mode) or concurrently with the main processor when the main processor is in an active state (e.g., application execution). The auxiliary processor may control a function or state of various components (e.g., the communication circuit 303) when the main processor is inactive. Additionally, the auxiliary processor (e.g., the image signal processor or the communication processor) may be implemented as part of another component (e.g., the communication circuit 303) that is functionally related to. According to an embodiment, the auxiliary processor (e.g., the neural network processing device) may include a hardware structure specialized in processing the artificial intelligence model.

The artificial intelligence model may be generated through machine learning. Such learning may be implemented in the computing device that the artificial intelligence model is performed or may be performed through a separate server. The learning algorithm may include supervised learning, unsupervised learning, semi-supervised learning, reinforcement learning, or inverses reinforcement learning. The artificial intelligence model may include multiple artificial neural network layers. The artificial neural network may be one of deep neural network (DNN), convolutional neural network (CNN), recurrent neural network (RNN), restricted boltzmann machine (RBM), deep belief network (DBN), bidirectional recurrent deep neural network (BRDNN), deep Q-networks, transformer, or a combination of two or more of the above, but is not limited to the above examples. The artificial intelligence model may additionally or alternatively include a software structure in addition to the hardware structure. Meanwhile, the operation of the computing device described below may be understood as the operation of the processor 301.

The memory 302 may store various data output by at least one component (e.g., processor 301) of the computing device. The data may include software and input or output data for instructions. The memory 302 may include a volatile memory or a non-volatile memory and store the operating system, middleware, or application, and/or the artificial intelligence models.

The communication circuit 303 may support the establishment of a direct (e.g., wired) or wireless communication channel between the computing device and an external electronic device (e.g., the measuring device or the user device), and communication performance through the established communication channel. The communication circuit 303 may include one or more communication processors (e.g., communication chips) that operate independently from the processor 301 (e.g., the program processor) and support wired or wireless communication.

The communication circuit 303 may include a wired or wireless communication module for cellular, short-range wireless, GNSS, local area network (LAN), or power line communication module. These communication modules may communicate with computing device (e.g., mobile device, wearable device, or server device) over various networks (e.g., short-range communication network such as Bluetooth, Wi-Fi (wireless fidelity) direct, IrDA (infrared data association) or long-range communication network such as legacy cellular network, 5G network, next-generation communication network, the Internet, or a computer network (e.g., LAN or WAN)).

These various types of communication modules may be integrated into one component (e.g., a single chip), or may be implemented as multiple separate components (e.g., multiple chips). The wireless communication module may identify or authenticate the computing device within the communication network by using subscriber information (e.g., international mobile subscriber identifier (IMSI)) stored in the subscriber identification module. The wireless communication module may support 5G networks and next-generation communication technologies (e.g., new radio access technology (NR)). The NR access technology may support high-speed transmission of high-capacity data (eMBB (enhanced mobile broadband)), terminal power minimization and multiple terminal access (mMTC (massive machine type communications)), or high-reliability and low-latency communications (URLLC). The wireless communication module may support a high frequency band (e.g., mmWave band) to achieve a high data rate. The wireless communication module may support various technologies for securing performance in the high frequency band, for example, beamforming, massive multiple-input and multiple-output (MIMO), full dimensional MIMO (FD-MIMO), array antenna, analog beam-forming, or large-scale antenna.

The wireless communication module may support a Peak data rate (e.g., 20Gbps or more) for eMBB implementation, a loss coverage (e.g., 164dB or less) for mMTC implementation, or a U-plane latency (e.g., 0.5ms or less, or round trip 1ms or less, respectively, for downlink (DL) and uplink (UL)) for URLLC implementation.

The robot system 320 may include multiple robot apparatus 310a, 310b, 310c, 310d, and others, such as cooperating robots, industrial robots, mobile robots with autonomous driving functions, automatic transport robots, or autonomous driving forklift.

For instance, the first robot apparatus 310a may include at least one robot arm 311, at least one driving device 312 for providing power to the robot arm, at least one sensor 313, at least one processor 314, and memory 315. The processor 314 may be a sub-processor for communicating with the main processor and controlling the components of the robot.

The robot may be a device with one or more actuators and parts. The actuator may convert electrical energy into kinetic energy based on the control signal. For example, the actuator may be any one of a direct current (DC) servo motor, an alternating current (AC) servo motor, a stepping motor, a linear motor, a hydraulic cylinder, a hydraulic motor, an air pressure cylinder, and an air pressure motor.

The robot system 320 may further include at least one end effector for performing a task. The at least one end effector may be connected to the end of the robot apparatus (or a robot arm in the robot apparatus) to perform a task.

For example, the end effector may include, but is not limited to, a gripper used to pick or move an object (e.g., a mechanical gripper that picks an object using fixed fingers and a vacuum (or pneumatic) gripper that picks an object using vacuum), a paint spray gun that allows a welding torch robot designed to perform a welding operation to automatically perform paint or coating operations, a camera and sensor used for quality inspection, precision measurement, or visual monitoring of a working environment, a tool holder that allows a robot to perform various assembly operations by mounting a drill, screw driver, or other tools, an electrical and electronic component manipulator used to handle or assemble precise electronic components, or a scraper used to remove a material attached to a surface.

The battery processing automation system may further include at least one sensor 330, worker terminal 340, or at least one processing device 350 that communicates with the computing device 300.

The sensor 330 may include a camera, a radar sensor, an ultrasonic sensor, a depth measurement sensor (e.g., Lidar, TOF camera), a motion detection sensor, a temperature detection sensor, or a thermal image camera for obtaining visual information about the workspace.

The worker terminal 340 may be an electronic device (e.g., mobile device such as a smartphone, a tablet PC, or a display device connected to an automated system) capable of communicating with the computing device 300. The computing device 300 may control the automation system based on the command received from the worker terminal 340.

A processing device 350 may physically or chemically process a battery. The processing device 350 may include a diagnostic device for diagnosing performance of a battery, a charger for charging a battery, or a discharger for discharging a battery, but is not limited thereto.

The battery processing automation system may further include at least one lighting for controlling brightness inside the working cell, a foreign substance suction device for suctioning foreign substances like dust in the working space, and an air circulation device for controlling temperature and humidity in the working space.

The processor 301 may train the robot system 320 using various artificial intelligence learning method.

The processor 301 may utilize imitation learning to train the robot system 320. The imitation learning is a method of learning by observing and mimicking the behaviors of humans or other robots. This method enables the robot to acquire techniques necessary for performing complex tasks through the imitation learning.

The processor 301 may utilize reinforcement learning to train the robot system 320. In reinforcement learning, the robot learns through trial and error by selecting behaviors in a given environment and receives feedback based on the outcomes. This method allows the robot to find an optimal sequences of actions to achieve a specific goal through the reinforcement learning.

The processor 301 may utilize inverse reinforcement learning to train the robot system 320. The inverse reinforcement learning is a learning method of inferring reward functions from observed behavior. Instead of directly training the robot what specific behaviors should be taken to achieve a goal, this method trains the robot to understand and infer the goal based on observed behaviors. Through inverse reinforcement learning, the processor 301 may train the robot to observe human behavior, comprehend its purpose, and then act in a similar manner to achieve comparable goals in a similar situation.

Hereinafter, a detailed description of automation system based on a robot system for providing battery processing automation will follow.

### [Battery Transport and Storage System]

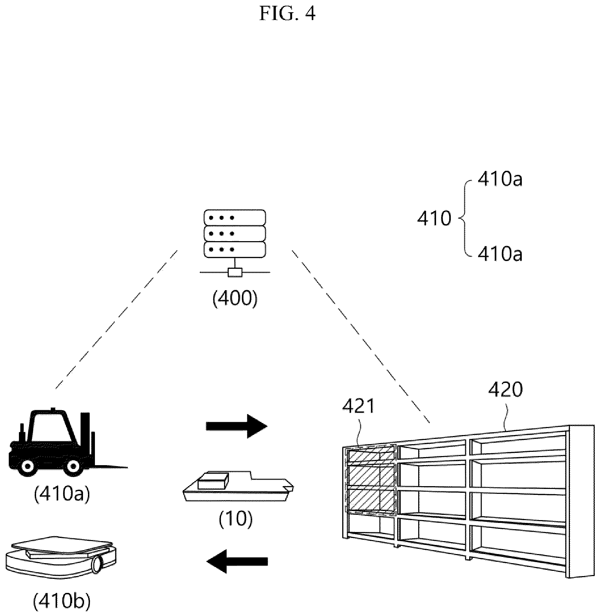

FIG 4 illustrates a configuration of a battery transport and storage system according to various embodiments.

Referring to FIG 4, the battery transport and storage system may comprise at least one transport device 410, a storage 420 with multiple slots, and a computing device 400 including a memory and at least one processor.

The transport device 410 may include a first transport device 410a (e.g., autonomous forklift) for loading, unloading, or taking out the battery in the storage 420 and a second transport device 410b (e.g., mobile robot or conveyor) for transporting the battery to the working space. The transport device 410, equipped with an autonomous driving function, may transport the battery without human intervention (e.g., without the manual manipulation of a person).

The storage 420 may include multiple slots for storing the battery. The storage 420 may further include at least one sensing device for monitoring the battery stored in the slots, such as temperature sensor for detecting potential fire risks.

The storage 420 may further include a transport module for moving batteries in the storage. The transport module may relocate batteries between the slots in the storage and may include a moving mechanism, such as a rail-based system, but is not limited thereto.

The battery 10 may be loaded, transported, or stored on a pallet. The transport device 410 may move the battery loaded on the pallet, and the storage 420 may accommodate the battery loaded on the pallet into at least one slot.

The processor in the computing device 400 may perform an operation of transporting the battery to the storage based on the control signal indicating the need to store the battery. Additionally, the processor may perform an operation of taking out the battery from the storage based on a control signal indicating the need to remove the battery.

The memory in the computing device 400 may store identification information including multiple identifiers corresponding to each of the plurality of slots of the storage. Specifically, the computing device 400 may store an identifier reflecting whether a battery is accommodated and/or information about the battery in each slot.

The processor may set the condition of the battery to be stored in multiple slots within the storage 420. The processor may control the transport device 410 and the storage 420 to take out or store the battery according to the set condition. **In** this case, the identification information stored in the memory may include the condition information indicating the condition of the battery to be stored in the target slot.

For example, the processor may set the battery storage condition based on whether multiple processing processes to be performed on the battery have been completed. Specifically, the processor may determine the appropriate slot by identifying the battery according to whether the diagnosis/discharge process is performed or whether the dismantling process is performed.

Additionally, the processor may set the battery storage condition based on the processing priority of the battery to be placed in the storage slots. Specifically, the processor may prioritize the processing based on the battery's stability or the extent of the damage to the battery. That is, the battery storage system ensures that a battery with low stability and significant damage is quickly took out and processed.

The battery storage system may be implemented to store the battery separately based on each manufacturer. The battery storage system may categorize the battery by type (for recycling or reuse) and store the battery. The battery storage system can determine a slot to store the battery based on the user input.

Further, the battery storage system may categorize the battery by diagnosis grade and store the battery.

The storage 420 may include multiple areas(zones) partitioned according to a predetermined battery storage condition. The area may include at least one slot.

For example, the first area 421 of the storage may be set to accommodate a battery that meets the first condition (e.g., performing the diagnosis and discharging process). The processor may be set to place the battery satisfying the first condition into the nearest available slot within the first area 421, but it is not limited thereto.

### [Battery Pre-Processing System]

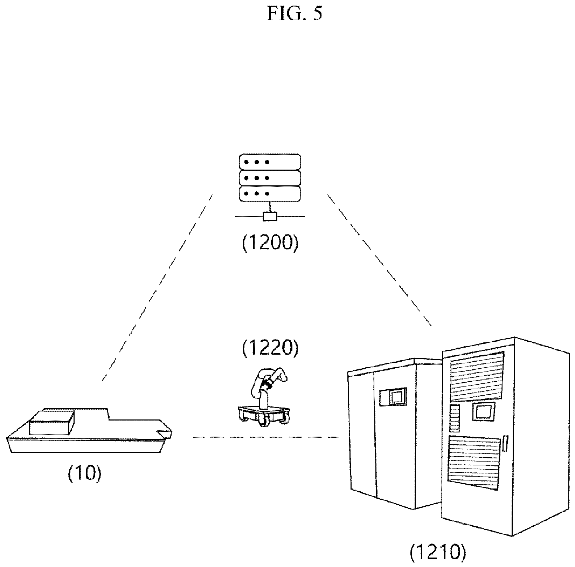

FIG. 5 illustrates a configuration of a battery pre-processing system according to various embodiments.

Referring to FIG 5, the battery pre-processing system may include at least one device 1210, at least one robot 1220, a memory, and a computing device 1200 with at least one processor.

The device 1210 may include a charging device for charging a battery, a discharging device for discharging a battery, or a diagnostic device for diagnosing a battery.

The computing device 1200 may preprocess batteries using the device 1210. Specifically, the computing device 1200 may diagnose a battery using a battery diagnostic device.

The computing device 1200 may obtain the state of charge (SOC) information by measuring the amount of charge remaining in the battery through the battery diagnostic device.

**In** addition, the computing device 1200 may obtain the state of health (SOH) information indicating the battery's lifespan and health through the battery diagnostic device.

The computing device 1200 may determine if the battery operates within a normal parameter by measuring its voltage and current through the battery diagnostic device.

In addition, the computing device 1200 may diagnose battery aging by measuring internal resistance through the battery diagnostic device. The internal resistance of the battery increases as the battery ages.

The computing device 1200 may measure the temperature data of the battery through the battery diagnostic device. The past temperature data can be used to diagnose past performance and lifespan of the battery.

The computing device 1200 may determine the remaining life of the battery by obtaining its charge and discharge cycle through the battery diagnostic device.

Additionally, the computing device 1200 may provide information about the internal chemical and electrical processes of the battery by applying the electrochemical impedance spectroscopy (EIS) through the battery diagnostic device. Through this, the computing device 1200 may identify a performance degradation pattern or defect of the battery.

The computing device 1200 may measure the actual capacity of the battery by fully charging and discharging the battery through a battery charging and discharging device. The computing device 1200 may check whether the battery performance degrades by comparing the measured actual capacity with the rated capacity of the battery.

The computing device 1200 may measure the balance state of the cells within the battery pack using the battery diagnostic device. Specifically, the computing device 1200 may check whether the voltages of individual cells are balanced.

In addition, the computing device 1200 may charge a battery module (e.g., a battery powering an electric-driven moving body) using a battery charging device.

The computing device 1200 may connect or disconnect the device 1210 to a battery 10 using at least one robot 1220. Specifically, the robot 1220 may connect or disconnect the at least one connection to the battery 10 by applying physical force to the connection (e.g., a connector) in the device 1210.

The method of integrating a battery with a processing device using a robot will be described below.

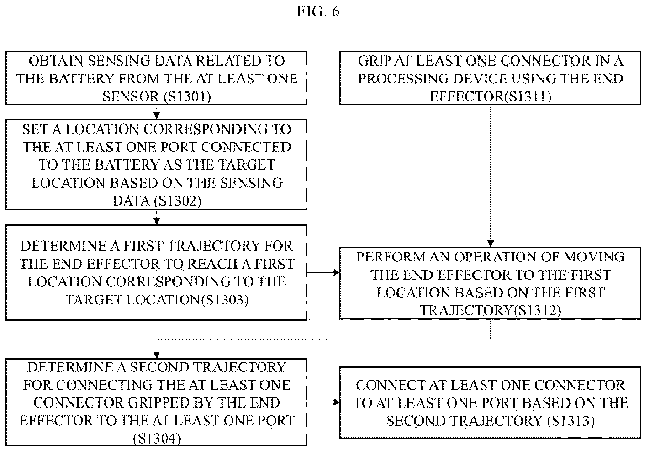

FIG. 6 illustrates a method for a robot system to control a robot apparatus according to various embodiments.

Referring to FIG 6, the robot system may connect at least one connector in at least one processing device to a battery by controlling the robot apparatus based on a control algorithm executed by a processor.

Specifically, the processor in the robot system may obtain sensing data related to the battery from the at least one sensor (s1301).

Sequentially or independently from step s1301, the robot apparatus may grip at least one connector in a processing device using the end effector (s1311).

The processor may set a location corresponding to the at least one port connected to the battery as the target location based on the sensing data. Specifically, the processor may extract a feature value from the sensing data and determine the target location by specifying an area with a feature value matching a predetermined condition.

**In** this case, the processor may use at least one artificial intelligence model (e.g., CNN) to process the sensing data.

The processor may set the target location based on a predetermined condition, such as the ability to communicate through at least one port. The processor may identify multiple ports from the sensing data, and it may determine which of these multiple ports can communicate with the processing device. The location corresponding to the communicated port is set as the target location.

The processor may activate an alarm if it is impossible to establish a communication connection through the determined port based on sensing data.

Optionally, the processor may obtain battery information and determine an operating parameter for the processing device based on the battery information. For example, the processor may set the operating parameter (e.g., voltage or current) for the battery diagnostic device to diagnose the battery based on the battery's state information. Additionally, the processor may set the operating parameter (e.g., charging time, charging speed) for the battery charging device to charge the battery based on the battery's charging state information.

The processor may control the robot apparatus by generating a trajectory for its movement.

Specifically, the processor may generate the trajectory by determining dynamic parameters (e.g., speed, acceleration, force, torque) at various points until at least a portion (e.g., multiple joints in the robot apparatus) of the robot apparatus reaches a specific destination.

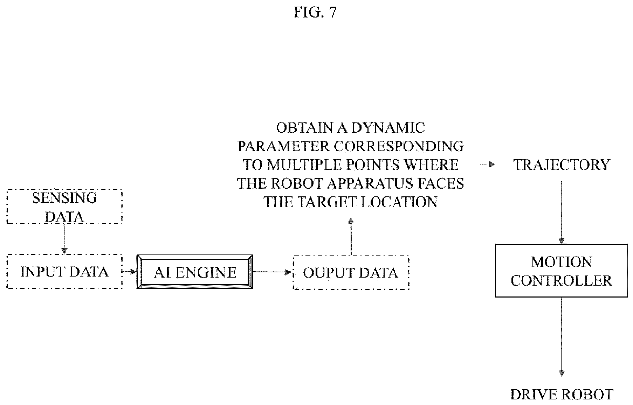

FIG. 7 illustrates a method for a processor to control a robot apparatus based on an artificial intelligence engine according to various embodiments.

The at least one processor may control the robot apparatus by leveraging the artificial intelligence engine (or model) to perform a specific task. The specific method of training the robot apparatus will be omitted because it has been described above.

Referring to FIG 7, the processor may generate a trajectory of the robot apparatus based on sensing data using an artificial intelligence engine. Specifically, the processor may obtain input data from the sensing data and feed the input data into the artificial intelligence engine. The processor may obtain output data from at least one layer in the artificial intelligence model. The processor may obtain a dynamic parameter (e.g., speed, acceleration, force, torque) corresponding to multiple points where the robot apparatus faces the target location. The trajectory may be composed of a set of dynamic parameters, and the set of dynamic parameters may be tailored to the operational goals of the robotic device.

The processor may generate a trajectory for the robot apparatus to operate based on the dynamic parameter.

The processor may input the generated trajectory into the motion controller of the robot apparatus, and the motion controller may drive the robot apparatus based on the trajectory.

In addition, the processor may obtain a dynamic parameter for the end effector to perform a specific operation (e.g., screwing, picking, etc.)

According to one embodiment, by utilizing the artificial intelligence engine to control the trajectory of the robot apparatus or the end effector's operation, the processor may achieve a task execution with a minimum computational cost.

Referring again to FIG 6, the processor may determine a first trajectory for the end effector to reach a first location corresponding to the target location. (s1303). The robot apparatus may perform an operation of moving the end effector to the first location based on the first trajectory. (s1312).

Specifically, the processor may determine the first trajectory based on the physical relationship between the robot apparatus (or the end effector in the robot apparatus) and the target location based on the sensing data.

The processor may determine at least one of the location coordinates of the target location, the direction from the robot apparatus (or the end effector in the robot apparatus) and the distance from the robot apparatus (or the end effector in the robot apparatus) based on the sensing data. The processor may determine the first trajectory based on at least one of the location coordinates of the target location, the direction from the robot apparatus (or the end effector in the robot apparatus), and the distance from the robot apparatus (or the end effector in the robot apparatus).

The first location may be placed at a predetermined distance from the target location. The processor may be trained to locate the end effector at the first location placed at a predetermined distance from the target location. For example, the processor may measure the distance between the end effector and the target location using a sensor measuring a distance, and it may determine the first location based on the measured distance.

In addition, the processor may determine a second trajectory for connecting the at least one connector gripped by the end effector to the at least one port. (s1304). The robot apparatus may connect at least one connector to at least one port based on the second trajectory. (s1313).

The processor may train an artificial intelligence model such that a portion (e.g., a protrusion for connection) of the connector is inserted into a portion (e.g., a receiving unit for connection) of the at least one port. The processor may control the robot apparatus to apply force for connecting the connector to the port using the trained artificial intelligence model.

The processor may determine that the connection operation is completed when the connector no longer moves. The processor may determine that the connection between the connector and the port is completed when the connector is no longer inserted into the port even though the force is applied to the connector according to the second trajectory, or after a predetermined duration without movement.

Upon completion of the processing task by the processing device, the processor may control the release of the connection between the processing device and the battery. Specifically, the processor may control the robot apparatus by executing a trajectory to grip the connector using the end effector and disconnect the connector from the port.

The battery management system (BMS) may be an electronic system connected to the battery to monitor its state. This battery management system may be built (or integrated) within the battery or connected to the battery externally.

The battery processing system may obtain monitoring information on the battery from the BMS through the communication with the BMS. That is, the BMS diagnoses the battery by receiving monitoring information on the battery through the communication with the BMS.

Accordingly, when the communication with the BMS is possible, the battery processing system may obtain diagnosis information on the battery through the battery diagnosis process.

However, depending on the battery, certain batteries may lack a built-in BMS, or the communication with the BMS may be infeasible (e.g., due to port damage or not applied by the manufacturer).

**In** this case, the battery processing system needs to diagnose the battery by individually connecting the diagnostic device to multiple ports in the battery to assess various parameters (e.g., SOC, SOH, etc.). However, since the ports may be placed inside the battery, accessing to such ports may require removing or dismantling the battery cover.

When the communication with the BMS is not feasible, the battery processing system needs to perform the battery diagnosis process after dismantling the battery cover and connecting to the available port.

By determining the feasibility of communication with the BMS, the battery processing system may select the appropriate battery processing process, thereby enhancing the efficiency of the battery processing automation.

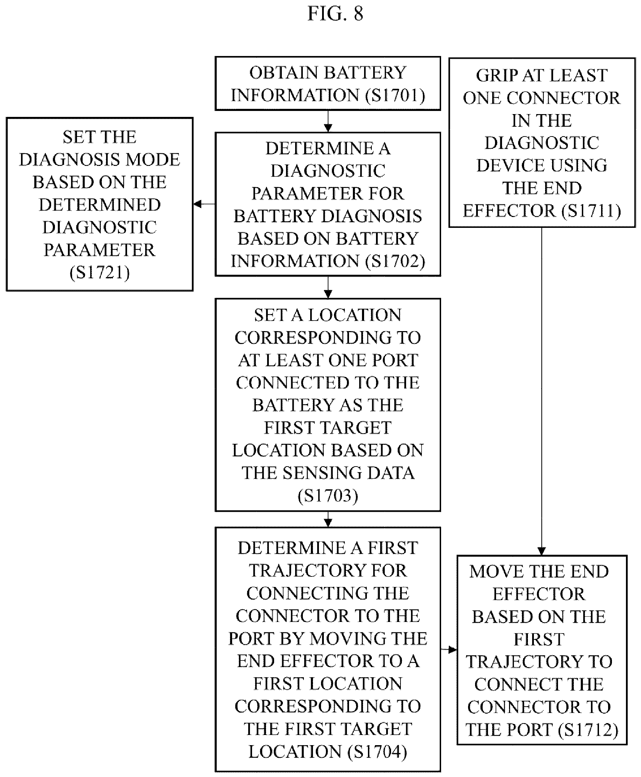

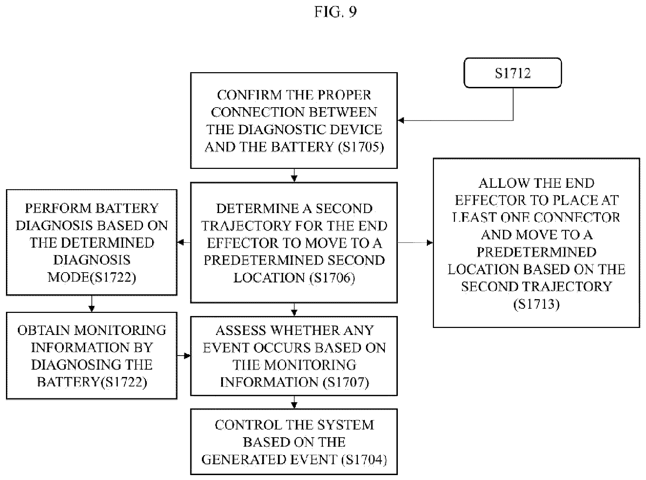

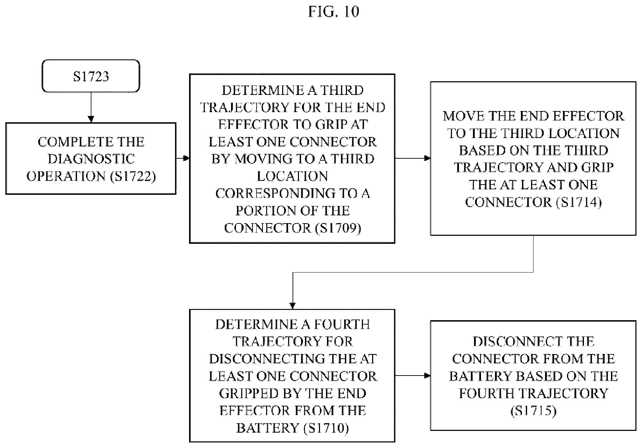

FIGS 8 to 10 depict a method for a battery processing system to connect and/or disconnect a battery diagnosis apparatus and a battery by controlling a robot apparatus according to various embodiments.

Referring to FIGS 8 to 10, at least one processor in the battery processing system may obtain battery information (s1701).

Sequentially or independently from step s1701, the robot apparatus may grip at least one connector in the diagnostic device using the end effector (s1711).

The processor may determine a diagnostic parameter for battery diagnosis based on battery information (s1702). The diagnostic device may set the diagnosis mode based on the determined diagnostic parameter (s1721).

The processor may determine a diagnostic parameter suitable for diagnosing the battery based on the battery information. For example, the processor may determine voltage or current suitable for battery diagnosis, and it may set a diagnostic parameter of the diagnostic device based on the determined voltage or current.

In addition, the processor in the diagnostic device may set the diagnosis mode based on the diagnostic parameter. For example, the diagnostic device may set the diagnosis mode by selecting at least one of the diagnosis modes based on the level of diagnosis (basic diagnosis, detailed diagnosis, precise diagnosis, etc.). The diagnostic device may set the diagnosis mode by selecting at least one of the diagnosis modes based on the diagnosis stage (e.g., initial check, later check).

The processor may set a location corresponding to at least one port connected to the battery as the first target location based on the sensing data (s1703). The port may be located within the battery pack or on the external surface of the battery. If the upper cover of the battery is dismantled, at least one port may be revealed. The port may be electrically connected to the battery management system (BMS) of the battery. The port may be electrically connected to a configuration capable of diagnosing at least one state (e.g., charging state, state of health, voltage state, current state, etc.) of the battery.

The processor may determine a first trajectory for connecting the connector to the port by moving the end effector to a first location corresponding to the first target location (S1704). The robot apparatus may move the end effector based on the first trajectory to connect the connector to the port (s1712).

In addition, the processor may confirm the proper connection between the diagnostic device and the battery (s1705).

The processor may determine the physical connection state between the diagnostic device and the battery. For example, the processor may check whether the physical connection state between the connector in the diagnostic device and the port in the battery is normal. The processor may control the robot apparatus grasping the connector to apply force in the direction of disconnecting the connector from the port. If the connector is not disconnected from the port, the battery and the diagnostic device are properly connected.

In addition, the processor may confirm whether the diagnostic device and the battery are set to be suitable for diagnosis. For example, the processor may diagnose the battery when a predetermined criterion is satisfied by comparing the battery profile and the diagnostic parameter of the diagnostic device.

The processor may determine a second trajectory for the end effector to move to a predetermined second location (S1706).

In this case, the robot apparatus may allow the end effector to place at least one connector and move to a predetermined location based on the second trajectory (s1713).

In parallel, the diagnostic device may perform battery diagnosis based on the determined diagnosis mode (s1722). The processor in the diagnostic device may examine various states of the battery, and it may calculate SOC, SOH, SOP, or SOB of the battery based on the diagnosis result and determine the diagnosis grade.

In addition, the diagnostic device may obtain monitoring information by diagnosing the battery (s1723). The monitoring information may be obtained by the diagnostic device monitoring the state of the battery. Specifically, the processor in the diagnostic device may confirm the safety state of the battery or the presence or abnormality of the diagnostic device. The diagnostic device may monitor the safety state of the battery and the state of the diagnostic device while the diagnosis (or test) is being performed. The diagnostic device may transmit the monitoring information to the battery processing system. For example, the monitoring information may include a charging state of the battery, a voltage state of the battery, or a safety state of the battery.

The processor may assess whether any event occurs based on the monitoring information (s1707), which may include an event occurring during battery diagnosis. The event may include an event according to a diagnosis stage, an event according to a diagnosis function, an event for each test mode, or an emergency stop event, etc.

In addition, the processor may control the system based on the generated event (s1708). Specifically, the processor may control the system by determining feedback according to the type of the event.

For example, if battery instability is detected during an initial inspection, an alarm may be triggered, and the robot apparatus may disconnect the diagnostic device from the battery.

If the risk of fire is sensed, the processor may activate an alarm and control the robot apparatus to perform emergency measures. Specifically, the processor may control the robot apparatus to take a battery into a fire-extinguishing tank (e.g., water tank).

The diagnostic device may complete the diagnostic operation after diagnosing the battery according to step s1723 (s1724). In this case, the diagnosis device may calculate multiple indicators (e.g., SOC, SOH) related to the state of the battery, and it may calculate a diagnosis grade based on the multiple indicators.

In addition, the processor may determine a third trajectory for the end effector to grip at least one connector by moving to a third location corresponding to a portion of the connector (s1709). The robot apparatus may move the end effector to the third location based on the third trajectory and grip the at least one connector (s1714).

The processor may determine a fourth trajectory for disconnecting the at least one connector gripped by the end effector from the battery (s1710). In this case, the robot apparatus may disconnect the connector from the battery based on the fourth trajectory (s1715).

According to one embodiment, the processor may control the diagnosis process to store the battery in the battery storage system, classifying and storing batteries according to their diagnosis grade.

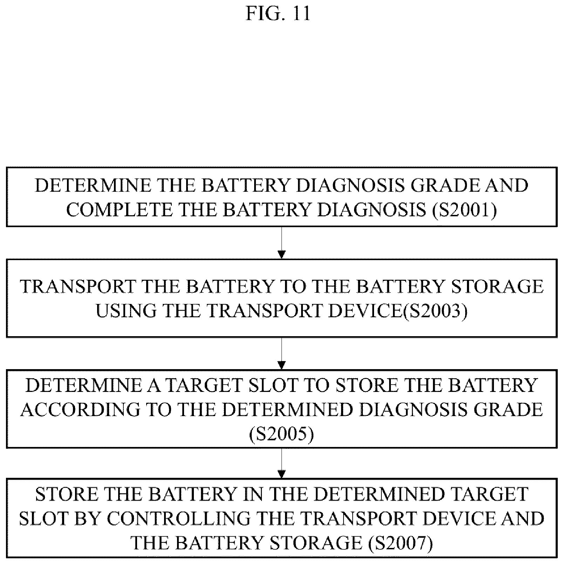

FIG. 11 illustrates a method for a battery processing system to store a battery according to a battery diagnosis grade according to various embodiments.

Referring to FIG 11, at least one processor in the battery processing system may determine the battery diagnosis grade and complete the battery diagnosis (s2001).

In addition, the processor may transport the battery to the battery storage using the transport device (s2003). The battery storage may include multiple slots for accommodating and storing the battery.

The battery storage may be implemented to store the battery according to the battery diagnosis grade. For example, the battery storage may include multiple areas partitioned for each battery diagnosis grade, and the specific area may be set to store the battery matching the specific diagnosis grade.

The processor may determine a target slot to store the battery according to the determined diagnosis grade (s2005). Specifically, the processor may select at least one slot corresponding to the battery diagnosis grade as the target slot. **In** this case, identification information corresponding to the battery diagnosis grade may be assigned to the target slot. The processor may determine the target slot by determining the storage area on the battery storage corresponding to the battery diagnosis grade.

The processor may determine the target slot using at least one sensor (e.g., a vision sensor). Specifically, the processor may determine the target slot by identifying at least one slot corresponding to the diagnosis grade of the battery to be stored based on the sensing data.

**In** addition, the processor may determine the target slot based on the communication with the battery storage system. Specifically, the processor may transmit the battery diagnosis grade to the battery storage system, and the battery storage system may determine the target slot corresponding to the diagnosis grade and transmit the location information of the determined target slot to the transport device.

The processor may store the battery in the determined target slot by controlling the transport device and the battery storage (s2007). The specific method of storing the battery in the target slot will be omitted because it has been previously described.

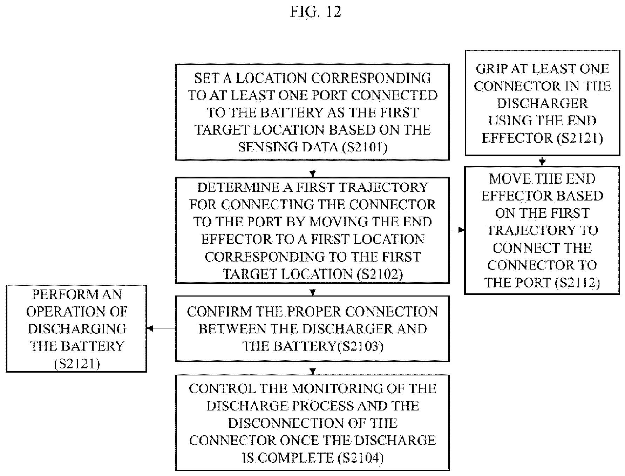

FIG. 12 illustrates a method for a battery processing system to connect a battery discharger to a battery by controlling a robot apparatus according to various embodiments.

Referring to FIG 12, at least one processor may set a location corresponding to at least one port connected to a battery as a first target location based on sensing data (s2101).

Sequentially or independently from step s2101, at least one robot apparatus may grip at least one connector in the discharger using the end effector (s2111).

In addition, the processor may determine a first trajectory for connecting the connector to the port by moving the end effector to the first target location (S2102). The port may be disposed on a portion of the battery. The port may be located on the outer surface of the battery, inside the battery pack, or revealed by dismantling the upper cover of the battery. The port may be electrically connected to at least one cell of the battery.

The robot apparatus may move the end effector along the first trajectory to connect the connector to the port (s2112).

The processor may confirm the proper connection between the discharger and the battery (s2103). The discharger may perform an operation of discharging the battery (s2121).

Furthermore, the processor may control the monitoring of the discharge process and the disconnection of the connector once the discharge is complete (s2104). For example, the processor may monitor parameters such as discharge speed, discharge amount, or remaining discharge time. Upon completion of the discharge, the robot apparatus may disconnect the connector from the battery.

### [Battery Dismantling System]

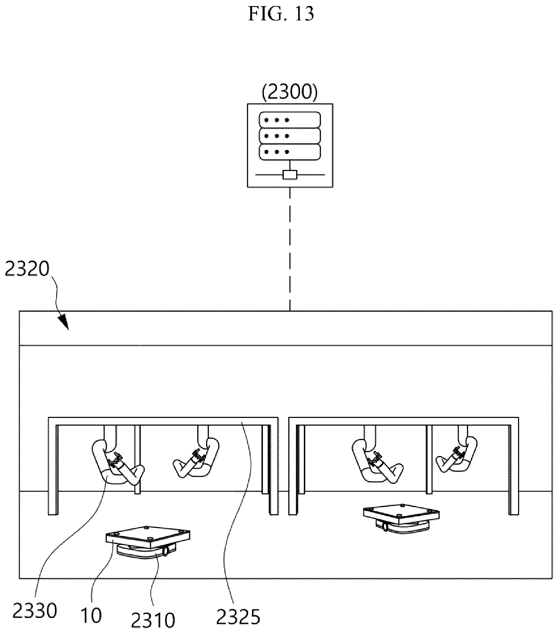

FIG. 13 illustrates a configuration of a battery dismantling system according to various embodiments.

Referring to FIG. 13, the battery dismantling system may include a computing device 2300, at least one transport device 2310 for loading and moving a battery 10, a battery dismantling area 2320 with a working space for dismantling a battery, and at least one robot apparatus 2330.

The computing device 2300 may control the transport device 2310 or the robot apparatus 2330 to transport the battery 10 and to dismantle at least one component of the battery 10. The computing device 2300 may include a main server (processor) for controlling the battery dismantling system and at least one sub-processor.

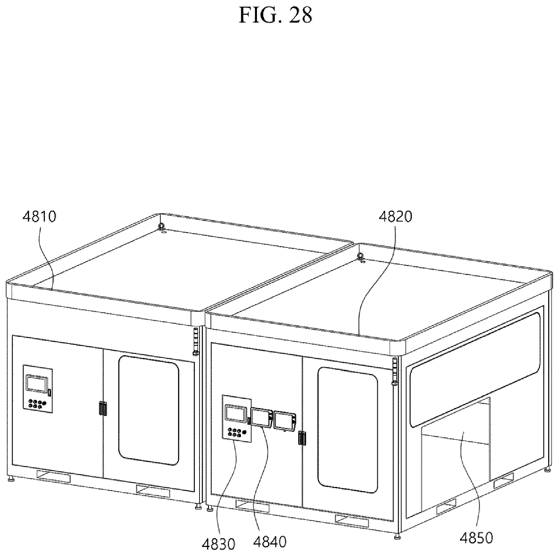

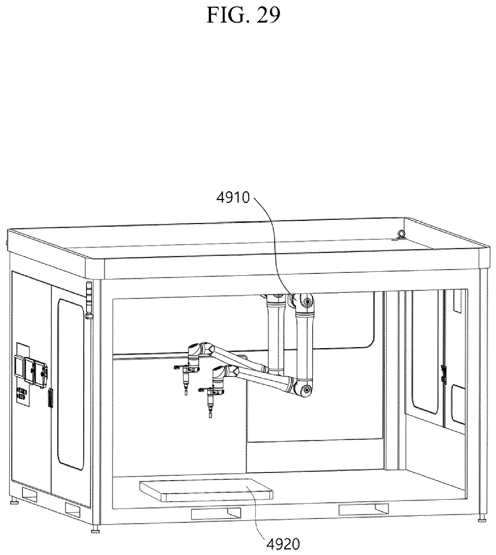

The battery dismantling area 2320 may include at least one working chamber 2325, which may be a modular space for dismantling operations. Details of the working chamber 2325 are described below in FIGS. 28 and 29.

The computing device 2300 may move the battery 10 using the transport device 2310. The transport device 2310, which provides a space for loading a battery, can be a mobile robot as shown in FIG. 13 or a conveyor (not shown).

The computing device 2300 may direct the transport device 2310 to enter the battery dismantling area 2320 and locate it within the work area of the robot apparatus 2330 enabling the robot apparatus 2330 to dismantle the battery 10.

For example, the computing device 2300 may locate the mobile robot carrying the battery 10 within the work area of the robot apparatus 2330 upon entering the battery dismantling area 2320. **In** this case, the computing device 2300 may control the robot apparatus 2330 to dismantle the battery 10 loaded in the mobile robot.

Similarly, the computing device 2300 may control the conveyor belt loading the battery 10 to enter the battery dismantling area 2320. The battery 10 may be transported along the conveyor belt to work area of the robot apparatus 2330, where the robot apparatus 2300 may be controlled to dismantle the battery 10.

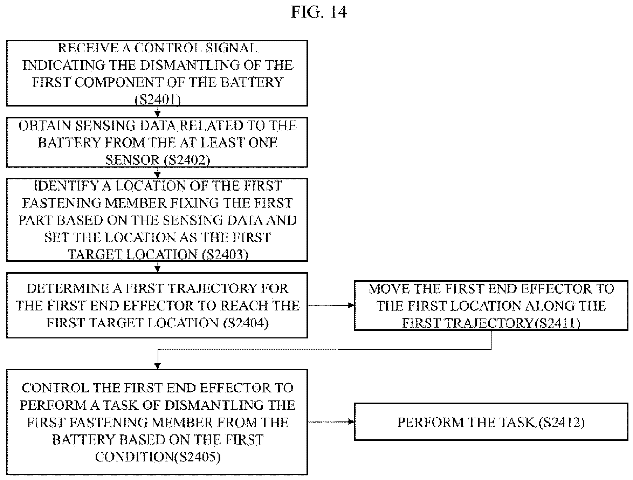

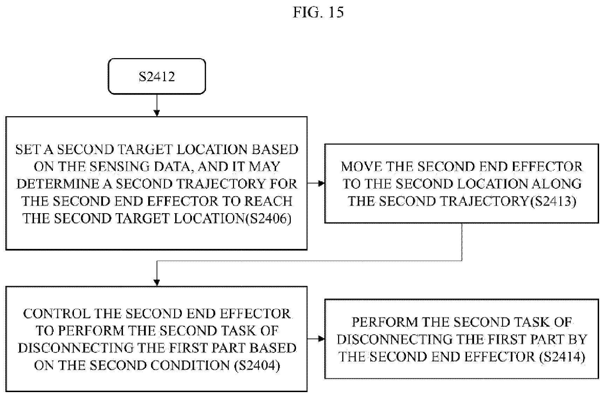

FIGS. 14 and 15 illustrate a method for operating a robot system to dismantle components of a battery pack according to various embodiments.

Referring to FIG. 14, at least one processor in the robot system may receive a control signal indicating the dismantling of the first component of the battery (s2410). The control signal may be input to the robot system by a user input or received from another system (e.g., a battery storage system, a battery pre-processing system). The first component may be an upper cover, a lower cover, a module, or a cell of the battery pack, but is not limited thereto. The first component may be any component coupled to the housing of the battery pack through a fastening member.

The processor may obtain sensing data related to the battery from the at least one sensor (s2402). The sensor may include a vision sensor, a camera sensor, an image sensor, a lidar sensor, or a radar sensor, but is not limited thereto. The sensor may be disposed on the apparatus or be disposed on the working chamber (See reference numeral 2325 in FIG. 13).

The processor may identify a location of the first fastening member fixing the first part based on the sensing data and set the location as the first target location (s2403). The first fastening member may be a bolt or a welding part. The processor may determine the first target location by identifying coordinates, directions, and distances of the first fastening member.

The processor may identify the locations of multiple fastening members based on the sensing data and select the first fastening member to be dismantled based on a predetermined criterion. The processor may determine the dismantling order for multiple fastening members in advance. **In** addition, the processor may select a fastening member close to the robot apparatus among the multiple fastening members. The processor may select two or more fastening members among the multiple fastening members which do not interfere with each other for operations by multiple robot apparatus.

The processor may determine a first trajectory for the first end effector to reach the first target location (s2404). The robot apparatus may move the first end effector to the first location along the first trajectory. Specifically, the processor may generate the first trajectory by inputting sensing data into an artificial intelligence model and obtaining a dynamic parameter set for reaching the first location from at least one layer in the artificial intelligence model.

The first end effector may be a means for dismantling the first fastening member, which may be a tool like a cross driver, a letter driver, or a circular driver for dismantling the bolt.

The processor may control the first end effector to perform a task of dismantling the first fastening member from the battery based on the first condition. (s2405). The robot apparatus may perform the task (s2412).

The first condition may be set based on whether the robot apparatus is ready to perform the task of dismantling the fastening member. The processor may identify a relationship (e.g., a distance, a direction) between the first end effector and the first fastening member, and it may determine that it is ready to perform the task if the relationship meets a predetermined criterion.

The first task may include multiple unit actions for dismantling the first fastening member. Specifically, the first task may include an operation of approaching the first end effector to the first fastening member, an operation of contacting the first end effector and the first fastening member, an operation of dismantling the first fastening member by driving the first end effector, and an operation of disconnecting the first fastening member.

For example, the processor may identify the contact between the first end effector and the first fastening member, and it may control the first fastening member to be dismantled by rotating the first end effector (e.g., rotating the screw).

The processor may simultaneously or sequentially perform multiple first tasks using multiple robot apparatus.

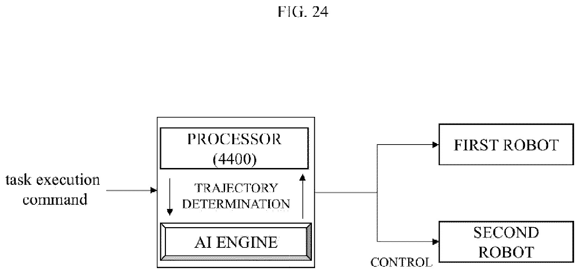

A detailed method for controlling the multiple robot apparatus to perform the task will be described below (FIG. 24 to FIG. 27).

The processor may determine whether the first task is completed by verifying if all the fastening members fixing the first component to the battery housing are dismantled based on the sensing data. Once the task of dismantling all the fastening members is completed, the processor may proceed to dismantle the first component.

The processor may identify the removal of the fastening member, and it may transmit a control signal to replace the end effector. The processor may control the robot apparatus to mount the second end effector for disconnecting the cover. The processor may control the robot apparatus to release the first end effector and mount the second end effector, and it may set the second robot apparatus with the second end effector as the working robot.

Referring to FIG. 15, the processor may set a second target location based on the sensing data, and it may determine a second trajectory for the second end effector to reach the second target location (s2406). **In** this case, the robot apparatus may move the second end effector to the second location along the second trajectory (s2413). Specifically, the processor may input the sensing data to the artificial intelligence model, and it may generate the second trajectory by obtaining a dynamic parameter set for reaching the second location from at least one layer in the artificial intelligence model.

The processor may determine the number of robot apparatus needed based on the specification (e.g., volume, weight) of the first component. The processor may control the first component to be dismantled using the robot apparatus, or it may control the first component to be dismantled using multiple robot apparatus.

Alternatively, the processor may dismantle the first component using an industrial robot or using an industrial robot equipped with multiple pneumatic grippers.

The second target location for dismantling the first part may be set to a location where is suitable for disconnecting the first part. The battery dismantling system may pre-store a location suitable for dismantling the part based on battery shape and set the second target location accordingly.

The second end effector may be a means for disconnecting the first part from the battery. For example, the second end effector may be a tweezer-type gripper or pneumatic gripper for holding and revealing the part.

The at least one processor may control the second end effector to perform the second task of disconnecting the first part based on the second condition (s2407). In this case, the robot apparatus may perform the second task of disconnecting the first part by the second end effector (s2414).

The second condition may be set based on whether the robot apparatus is ready to perform the task for disconnecting the first part. The processor may identify the relationship (e.g., the distance, the direction) between the second end effector and the first part. If the relationship meets the predetermined criteria, it may determine that the task is ready to perform. The second condition may be set based on the removal of the fastening member.

The second task may include multiple unit actions for disconnecting the first part. The second task may include an operation of approaching the second end effector to the first part, an operation of holding the first part by driving the second end effector, and an operation of disconnecting the first part, but is not limited thereto.

For example, the processor may approach the second end effector to the space between the first part and the battery housing, and it may hold the first part by driving the second end effector. The processor may disconnect the first part by moving the robot apparatus.

In addition, the processor may perform the second task by using multiple robot apparatus. The processor may set multiple target locations and may locate the multiple robot apparatus to each of the multiple target locations. **In** addition, the multiple robot apparatus may be simultaneously driven to perform the operation of disconnecting the first part.

The processor may control the robot apparatus to perform a task for insulating at the predetermined location of the battery pack. The processor may control the robot apparatus equipped with the third end effector to move to the predetermined location to perform the task for insulating.

For example, the processor may move the third end effector with the insulating material to the predetermined location, and it may perform the insulating operation by applying the insulating material to the target location.

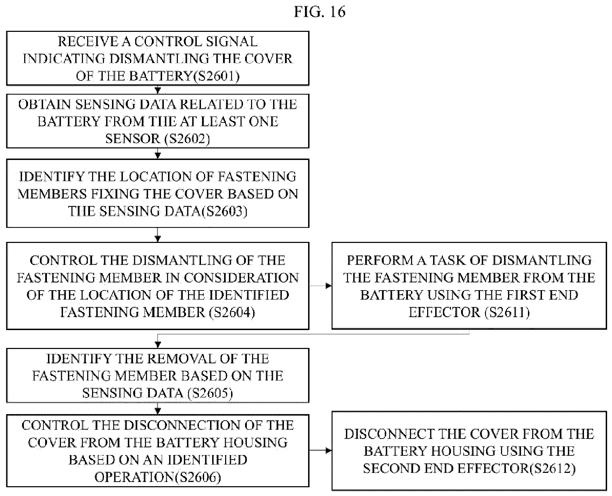

FIG. 16 illustrates a method for operating a robot system to dismantle an upper cover of a battery pack according to various embodiments.

Referring to FIG. 16, the at least one processor in the robot system may receive a control signal indicating dismantling the cover of the battery (S2601).

The robot system may dismantle the cover by using multiple cooperating robots or an industrial robot equipped with multiple pneumatic grippers.

The processor may obtain sensing data related to the battery from the at least one sensor (s2602).

The processor may identify the location of fastening members fixing the cover based on the sensing data (s2603). The processor may control the dismantling of the fastening member in consideration of the location of the identified fastening member (s2604). The robot apparatus may perform a task of dismantling the fastening member from the battery using the first end effector (s2611).

The processor may identify the removal of the fastening member based on the sensing data (s2605).

Optionally, the processor may dismantle a guide plate positioned between multiple fastening members and the battery. The processor may control at least one robot apparatus to dismantle the guide plate.

The processor may control the disconnection of the cover from the battery housing based on an identified operation (s2606). The robot apparatus may disconnect the cover from the battery housing using the second end effector (s2612).

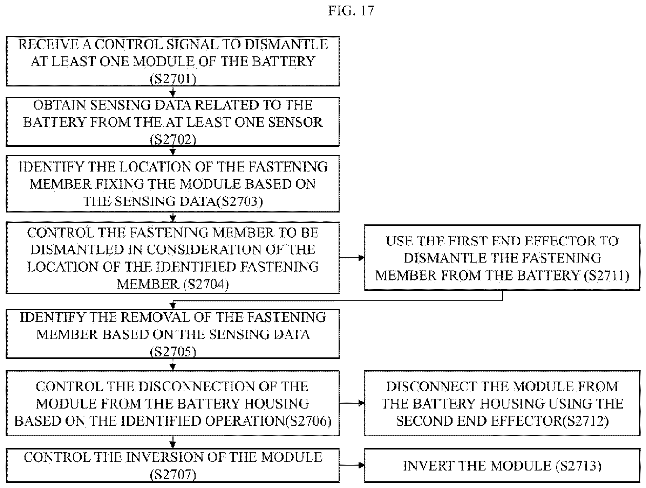

FIG. 17 illustrates a method for operating a robot system to dismantle a module in a battery pack according to various embodiments.

Referring to FIG. 17, at least one processor in the robot system may receive a control signal to dismantle at least one module of the battery.

The robot system may determine the dismantling sequence for dismantling multiple modules in the battery pack. The robot system may use multiple robot apparatus to dismantle multiple modules according to a predetermined order. The robot system may determine the dismantling order in advance in consideration of the electrical connection between the multiple modules.

The processor may obtain sensing data related to the battery from the at least one sensor (s2702). The processor may identify the location of the fastening member fixing the module based on the sensing data (s2703).

The processor may control the fastening member to be dismantled in consideration of the location of the identified fastening member (s2704). The robot apparatus may use the first end effector to dismantle the fastening member from the battery (s2711).

The processor may identify the removal of the fastening member based on the sensing data (s2705).

Optionally, the processor may dismantle the guide plate positioned between multiple fastening members and the battery. Specifically, the processor may control the robot apparatus to dismantle the guide plate.

The processor may control the disconnection of the module from the battery housing based on the identified operation (s2706). The robot apparatus may disconnect the module from the battery housing using the second end effector (s2712).

In addition, the processor may control the inversion of the module (s2707). The robot apparatus or a separate mechanism may invert the module (s2713). That is, the processor may perform an operation of inverting the module using a robot apparatus or a separate mechanism.

The processor may perform an operation of dismantling the cooling plate attached to the lower part of the module. The operations of dismantling the cooling plate by the processor using the robot apparatus may be similar to the operations described in FIGS. 14 and 15.

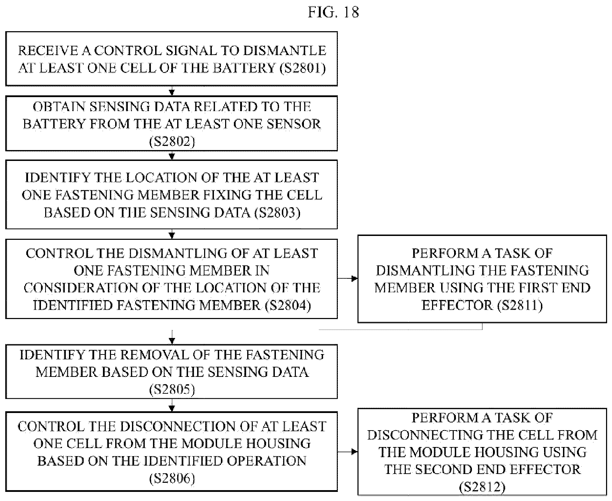

FIG. 18 illustrates a method for operating a robot system to dismantle cells in a battery pack according to various embodiments.

Referring to FIG. 18, at least one processor in the robot system may receive a control signal to dismantle at least one cell of the battery. The robot system may determine the sequence to dismantle a plurality of cells in the battery pack. Specifically, the robot system may dismantle multiple cells in a predetermined order using multiple robot apparatus. The robot system may determine the dismantling sequence in advance in consideration of the electrical connection between the cells.

The processor may obtain sensing data related to the battery from the at least one sensor (s2802). The processor may identify the location of the at least one fastening member fixing the cell based on the sensing data (s2803).

The processor may control the dismantling of at least one fastening member in consideration of the location of the identified fastening member (s2804). The robot apparatus may perform a task of dismantling the fastening member using the first end effector (s2811).

The processor may identify the removal of the fastening member based on the sensing data (s2805). The processor may dismantle a guide plate positioned between the plurality of fastening members and the battery. The processor may control at least one robot apparatus to dismantle the guide plate.

The processor may control the disconnection of at least one cell from the module housing based on the identified operation (s2806). The robot apparatus may perform a task of disconnecting the cell from the module housing using the second end effector (s2812).

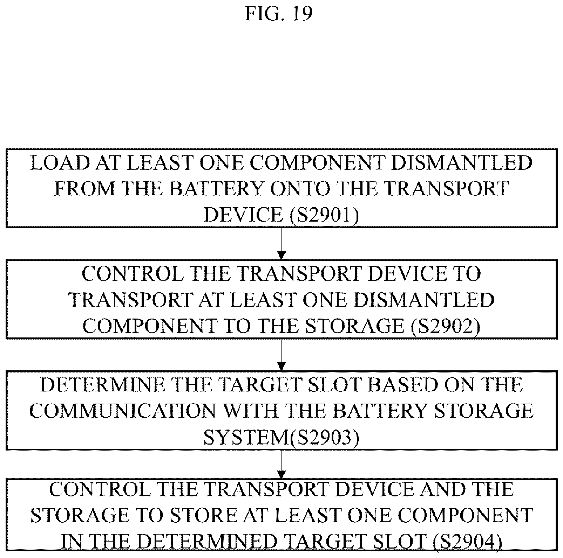

FIG. 19 illustrates a method for a battery processing system to store parts dismantled from a battery pack according to various embodiments.

Referring to FIG. 19, at least one processor in the battery processing system may load at least one component (e.g., module, cell, fastening member, battery housing) dismantled from the battery onto the transport device (s2901). The transport device may include a mobile robot or a conveyor belt, or any other suitable device. Transport device may be a different device (e.g., a separate mobile robot) used during the battery dismantling process, but it may be the same device (e.g., a connected conveyor belt).

The processor may control the transport device to transport at least one dismantled component to the storage (s2902). The storage may include multiple slots for accommodating and storing various battery components. The storage may be configured as the same device as the battery storage described in FIG. 4, but it may be configured as an independent device.

The storage may be implemented to store components based on the type of battery components. For example, the storage may have multiple areas partitioned for different types of battery part, with specific areas allocated for specific components.

The processor may determine a target slot within the storage to store the component based on the type of the component. Specifically, the processor may determine the target slot by selecting at least one slot corresponding to the type of the component.

The target slot may be assigned identification information that matches the type of the battery component. The processor may determine the target slot by determining the storage area on the storage corresponding to the type of the component.

The processor may determine the target slot using at least one sensor (e.g., a vision sensor). The processor may determine the target slot by identifying at least one slot corresponding to the type of the component to be stored based on the sensing data.

Additionally, the processor may determine the target slot based on the communication with the battery storage system. The processor may transmit the type of the component to be stored to the battery storage system, which then determine the target slot corresponding to the component. The processor may transmit the location information of the determined target slot to the transport device.

The processor may control the transport device and the storage to store at least one component in the determined target slot (s2904). The method for storing a component in a target slot may be applied to a method of storing a battery.

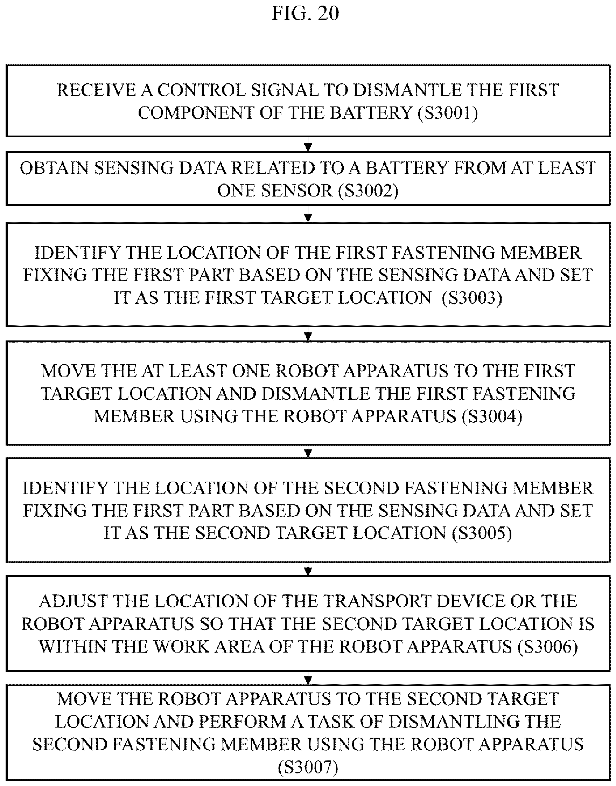

FIG. 20 is a flowchart illustrating a method for a battery processing system to dismantle multiple fastening members according to various embodiments.

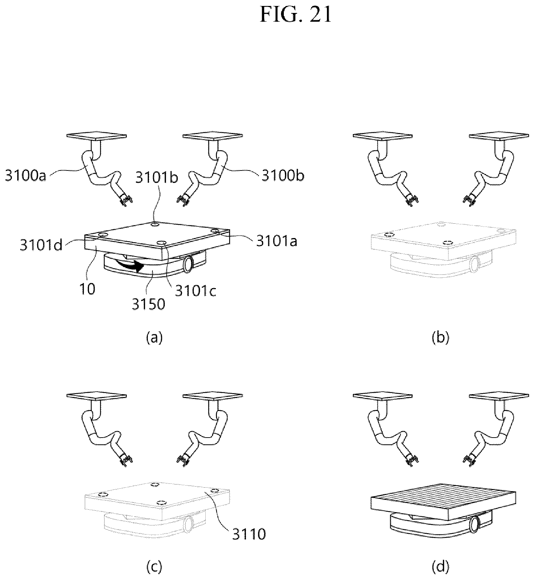

FIG. 21 is a diagram illustrating a method for a battery processing system to dismantle multiple fastening members according to various embodiments.

Referring to FIG. 20, at least one processor in the battery processing system may receive a control signal to dismantle the first component of the battery. The processor may obtain sensing data related to a battery from at least one sensor (s3002).

The processor may identify the location of the first fastening member fixing the first part based on the sensing data and set it as the first target location (s3003). The processor may move the at least one robot apparatus to the first target location and dismantle the first fastening member using the robot apparatus (s3004). The processor may identify the location of the second fastening member fixing the first part based on the sensing data and set it as the second target location (s3005). The processor may adjust the location of the transport device or the robot apparatus so that the second target location is within the work area of the robot apparatus (s3006).

For example, the processor may move the second target location into the work area by adjusting the location of the mobile robot, which may involve rotating the mobile robot loaded with the battery. The processor may move the second target location into the work area by adjusting the location of the conveyor belt, which may involve rotating at least a portion (e.g., a rotating conveyor) of the conveyor belt loaded with the battery.

**In** addition, the processor may move the second target location into the work area by adjusting the location of the at least one robot apparatus. The processor may move the robot apparatus to move the work area itself, and accordingly, the second target location may be located within the work area.

The processor may move the robot apparatus to the second target location and perform a task of dismantling the second fastening member using the robot apparatus (s3007).

Referring to FIG. 21 (a), the processor may control the dismantling of the first fastening member 3101a and the second fastening member 3101b of the battery 10 by using the first robot apparatus 3100a and the second robot apparatus 3100b.

Referring to FIGS. 21(a), 21(b) and 21(c), once the first fastening member 3101a and the second fastening member 3101b are dismantled, the transport device 3150 may be controlled to locate the third fastening member 3101c and the fourth fastening member 3101d within the work area of the first robot apparatus 3100a and the second robot apparatus 3100b.

By moving the mobile robot loaded with the battery 10, the transport device 3150 may be controlled to locate the third fastening member 3101c and the fourth fastening member 3101d within the work area of the first robot apparatus 3100a and the second robot apparatus 3100b. Specifically, the processor may adjust the location of the battery by rotating the mobile robot.

By driving the conveyor belt loaded with the battery 10, the transport device 3150 may be controlled to locate the third fastening member 3101c and the fourth fastening member 3101d a within the work area of the first robot apparatus 3100a and the second robot apparatus 3100b. Specifically, the processor may adjust the location of the battery by rotating the conveyor.

By moving the locations of the first robot apparatus 3100a and the second robot apparatus 3100b, the transport device 3150 may be controlled to locate the third fastening member 3101c and the fourth fastening member 3101d within the work area of the first robot apparatus 3100a and the second robot apparatus 3100b.

Referring to FIGS. 21(c) and 21(d), once all the fastening members are dismantled, the processor may dismantle the upper cover 3110 of the battery by using the first robot apparatus 3100a and the second robot apparatus 3100b.

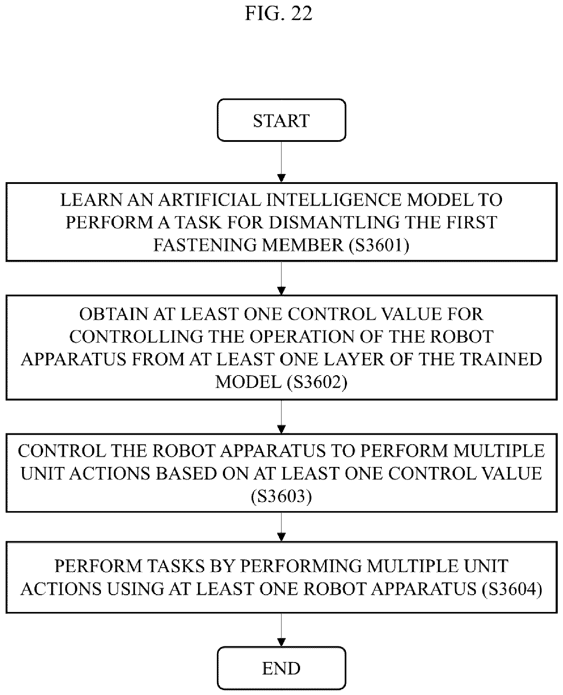

FIG. 22 is a flowchart illustrating a method for a robot system to perform a task using a robot apparatus according to various embodiments.

Referring to FIG. 22, at least one processor in the robot system may learn an artificial intelligence model to perform a task for dismantling the first fastening member (s3601). In this case, the artificial intelligence model mimics (or emulates) human movement, but it can be trained based on specific behavioral objectives. Since the method of training a robot artificial intelligence model has been previously described, it will be omitted here.

In addition, the processor may obtain at least one control value for controlling the operation of the robot apparatus from at least one layer of the trained model (s3602). The processor may control the robot apparatus to perform multiple unit actions based on at least one control value (s3603). The processor may perform tasks by performing multiple unit actions using at least one robot apparatus (s3604).

For the robot system to dismantle the battery, it is necessary to accurately determine the pose of the battery prior to the dismantling operation according to FIGS. 24 to 35.

The robot system may estimate the pose of the battery by processing the sensing data obtained from at least one sensor. In addition, the processor may calibrate the pose to be suitable for dismantling the battery based on the estimated pose.

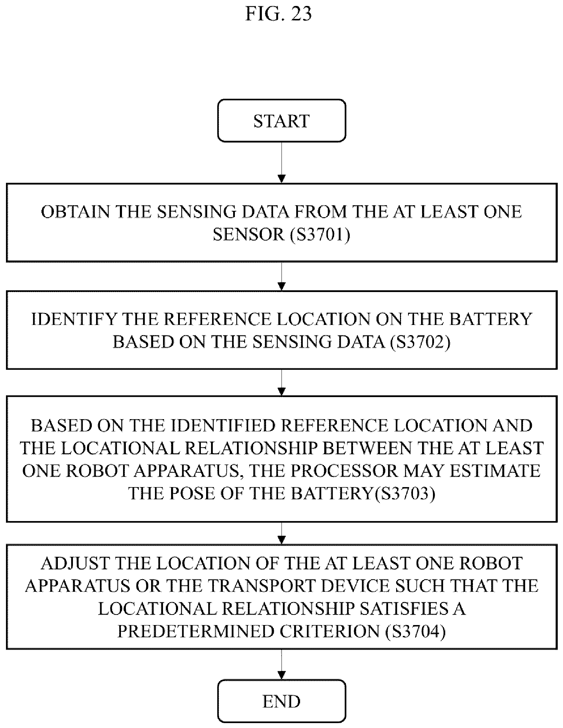

FIG. 23 is a diagram illustrating a method of estimating and calibrating the pose of the battery based on the sensing data collected by the robot system according to various embodiments.

Referring to FIG. 23, the at least one processor in the robot system may obtain the sensing data from the at least one sensor (s3701). The processor may identify the reference location on the battery based on the sensing data (s3702). Based on the identified reference location and the locational relationship between the at least one robot apparatus, the processor may estimate the pose of the battery (s3703).

The processor may subsequently adjust the location of the at least one robot apparatus or the transport device such that the locational relationship satisfies a predetermined criterion (s3704).

The processor may estimate and calibrate the pose of the battery by identifying the reference location on the battery. The processor may adjust the location of the battery so that the reference location on the battery aligns with a predetermined locational relationship (e.g., distance, direction) relative to the robot apparatus, or it may adjust the location of the robot apparatus.

For example, the processor may calibrate the pose by adjusting the location of the battery or by controlling the transport device (e.g., a mobile robot, a conveyor). The processor may calibrate the pose by adjusting the location of the at least one robot apparatus.

### [Diversity of Battery Packs]

The detailed configuration of the battery packs varies depending on each manufacturer. There are various types of components, quantity, placement, and the size of the battery packs.

For instance, one manufacturer may design the battery packs on a module basis, while another manufacturer may design the battery packs on a cell basis. The shapes of the modules and the cells are often different for each battery.

That is, the battery processing process needs to be performed differently depending on the battery profile (e.g., the battery manufacturer, kind, type, specification). In addition, it is necessary to train the robot artificial intelligence engine based on various battery types to implement a system for dismantling the battery in various environments.

### [Multirobot Control Algorithm]

The battery processing system according to an embodiment performs a battery processing operation using multiple robot apparatus. The battery processing system trains and uses the artificial intelligence engine to control multiple robot apparatus simultaneously, ensuring that their operations do not interfere with each other.

To this end, the battery processing system may train an artificial intelligence engine so that multiple robot apparatus performs tasks in consideration of movements of other robot apparatus.

FIG. 24 is a diagram illustrating a method for a battery processing system to control multiple robot apparatus using an artificial intelligence engine according to various embodiments.

Referring to FIG. 24, a battery processing system (4400) includes a processor and an artificial intelligence engine. The battery processing system 4400 may receive a task execution command, and it may use a processor and an artificial intelligence engine to determine trajectories for controlling multiple robots in response to the command. The specific method of generating the trajectory of the robot by the artificial intelligence engine has been described above, and thus will be omitted.

The processor may control multiple robot apparatus based on the determined trajectory. For example, the processor may control the first robot apparatus by transmitting the first trajectory to the first robot apparatus. In addition, the processor may control the second robot apparatus by transmitting the second trajectory to the second robot apparatus.

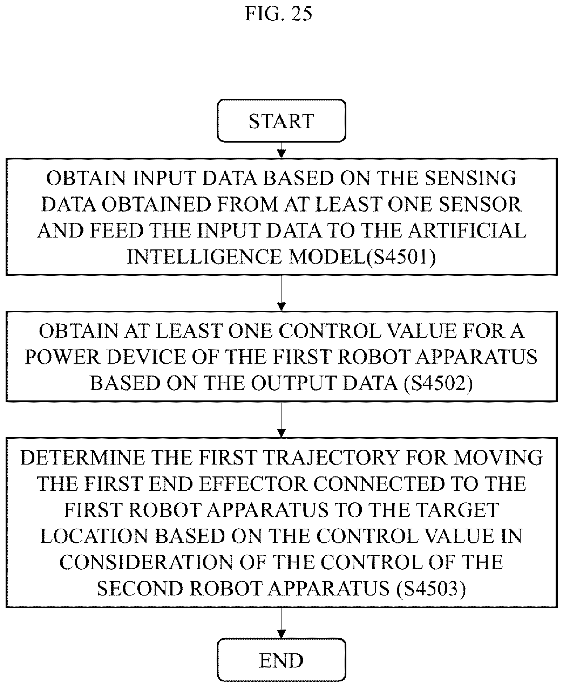

FIG. 25 is a flowchart illustrating an embodiment in which a battery processing system controls multiple robot apparatus using an artificial intelligence engine according to various embodiments.

Referring to FIG. 25, at least one processor may obtain input data based on the sensing data obtained from at least one sensor and feed the input data to the artificial intelligence model. The processor may obtain output data from at least one layer in the artificial intelligence model.

The processor may obtain at least one control value for a power device of the first robot apparatus based on the output data (s4502). Specifically, the processor may drive the power device by transmitting the control value to the power device (e.g., a motor) in the driving unit (e.g., a joint) for driving the first robot apparatus.

The processor may determine the first trajectory for moving the first end effector connected to the first robot apparatus to the target location based on the control value in consideration of the control of the second robot apparatus (s4503). The processor may determine the control state of the second robot apparatus by sensing the movement of the second robot apparatus or receiving the trajectory of the second robot apparatus.

The processor may determine the trajectory of the first robot apparatus in consideration of the location of the second robot apparatus. The processor may ascertain the location of the second robot apparatus based on the sensing data related to the battery. The processor may consider the location of the second robot apparatus and determine the trajectory of the first robot apparatus, which does not correspond to the location of the second robot apparatus. The processor may determine the trajectory of the first robot apparatus, which the trajectory of the first robot apparatus does not overlap with the location of the second robot apparatus.

In addition, the processor may determine the trajectory of the first robot apparatus in consideration of the trajectory of the second robot apparatus. The processor may ascertain the trajectory of the second robot apparatus by receiving the trajectory of the second robot apparatus. For example, the processor may predict the location of the second robot apparatus according to time in consideration of the trajectory of the second robot apparatus, and it may determine the trajectory of the first robot apparatus, which does not correspond to the predicted location of the second robot apparatus. The processor may determine the trajectory of the first robot apparatus which does not overlap with the trajectory of the second robot apparatus.

In addition, the processor may determine the trajectory of the first robot apparatus in consideration of the path of the second robot apparatus. The processor may ascertain the path of the second robot apparatus by predicting the path of the second robot apparatus based on the sensing data. Specifically, the processor may determine the path of the second robot apparatus by predicting the path which the second robot apparatus will move in the future based on the past path of the second robot apparatus from the sensing data. For example, the processor may predict the location of the second robot apparatus over time in consideration of the path of the second robot apparatus, and it may determine the trajectory of the first robot apparatus which does not correspond to the predicted location of the second robot apparatus. The processor may determine the trajectory of the first robot apparatus which does not overlap with the predicted path of the second robot apparatus.

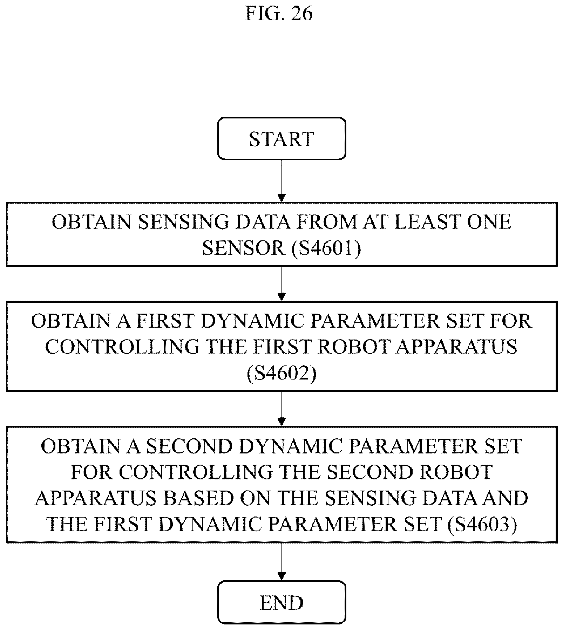

FIG. 26 is a flowchart illustrating an embodiment in which a battery processing system controls multiple robot apparatus using an artificial intelligence engine according to various embodiments.

Referring to FIG. 26, at least one processor may obtain sensing data from at least one sensor (s4602). The processor may obtain a first dynamic parameter set for controlling the first robot apparatus (s4602). This set include dynamic parameters (e.g., force, torque, acceleration, velocity) at multiple points forming the trajectory of the first robot apparatus.

In addition, the processor may obtain a second dynamic parameter set for controlling the second robot apparatus based on the sensing data and the first dynamic parameter set (s4603).

When the first robot apparatus is identified based on the sensing data, the processor may generate the trajectory for the second robot apparatus while considering the control of the first robot apparatus to avoid interference. This is because the interference of the first robot apparatus may occur in the trajectory of the second robot apparatus if the first robot apparatus is identified based on the sensing data. That is, the processor may identify the first robot apparatus based on the sensing data, identify the first dynamic parameter set corresponding to the trajectory of the first robot apparatus, and obtain the second dynamic parameter set corresponding to the trajectory of the second robot apparatus based on the first dynamic parameter set.

If the first robot apparatus is not identified based on the sensing data, the processor may generate the trajectory of the second robot apparatus without considering the first robot apparatus's control. This is because the interference of the first robot apparatus does not occur in the trajectory of the second robot apparatus if the first robot apparatus is not identified based on the sensing data.

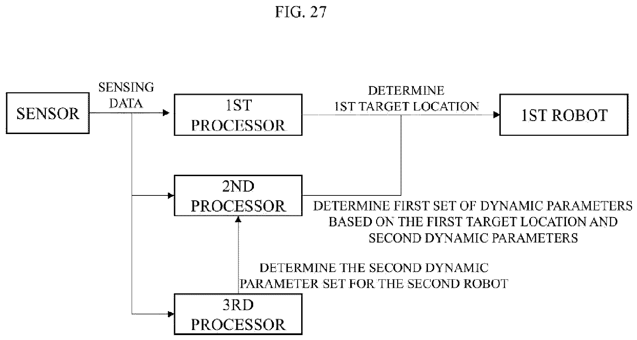

FIG. 27 is a diagram illustrating an embodiment where a battery processing system controls multiple robot apparatus using an artificial intelligence engine according to various embodiments.

Referring to FIG. 27, at least one sensor in the battery processing system may obtain sensing data and transmit the sensing data to at least one processor (e.g., the first processor, the second processor, and the third processor).

The processor may operate to control multiple robot apparatus based on the sensing data. For example, the first processor may determine a first target location for the first robot apparatus based on the sensing data and transmit this information to the first robot apparatus.

The second processor may generate a first trajectory for moving the first robot apparatus to the first target location. The first trajectory may include a set of dynamic parameters at multiple points.

The second processor may determine the first dynamic parameter set in consideration of the control state of another robot apparatus.

The third processor may determine the second dynamic parameter set for the second robot apparatus's trajectory and transmit the second dynamic parameter set to the second processor.

The second processor may determine the first dynamic parameter set based on the first target location and the received second dynamic parameter set.

The battery processing system, according to an embodiment, may control a plurality of robots without interference using the artificial intelligence model, thereby improving the efficiency of robot control.

### [Example of Working Chamber Implementation]

The battery processing system may transport the battery into the working chamber (see reference numeral 2325 in FIG. 4), and perform a battery processing process (e.g., dismantling process) using at least one robot apparatus. The working chamber may be a modular space for performing a battery processing operation (e.g., dismantling).

FIG. 28 is a diagram illustrating an example of a working chamber implemented in a battery processing system according to various embodiments.

Referring to FIG. 28, the battery processing system may include at least one working chamber 4810 and 4820. The working chamber provides a space for performing the battery processing operation therein. The working chamber may have a cuboid shape or others. The working chamber may further include a control module 4830 for controlling the process performed therein and a display module 4840 for monitoring the process performed therein. The working chamber may include at least one path 4850 for spatial connection between the outside and the inside.

The battery processing system may include multiple working chambers. For example, the battery processing system may have a first working chamber 4810 and a second working chamber 4820 that are connected to each other. The first working chamber 4810 and the second working chamber 4820 may be spatially connected to each other. For example, the first working chamber 4810 and the second working chamber 4820 may be spatially connected through a path formed between them.

To facilitate battery transport between these multiple working chambers, the battery processing system may use a mobile robot or a conveyor that spans the various chambers. For example, the mobile robot loaded with the battery may move between the first working chamber 4810 and the second working chamber 4820 via connecting the path.

The multiple working chambers may be implemented to perform different operations. The battery may undergo a first process (e.g., dismantling a battery cover) in the first working chamber 4810. Then, the battery may be transported to the second working chamber 4820 (using the transport device) where it undergoes a second process (e.g., dismantling a battery module).

In addition, the multiple working chambers may be implemented to perform the same operations.

FIG. 29 is a diagram illustrating an internal configuration of the battery processing system according to various embodiments.

Referring to FIG. 29, the working chamber may include at least one robot apparatus 4910. The robot apparatus 4910 may be attached to the ceiling of the working chamber or a mounting portion fixed to the working chamber.

The working chamber may be equipped with at least one working space 4920 for performing battery processing. The working space 4920 may be located within the working area of at least one robot apparatus 4910. The battery processing system may control the battery transport apparatus so that the battery entering the working chamber is located within the working space 4920.

The robot apparatus 4910 may be controlled to perform dismantling at least one component of the battery located in the working space 4920. The robot apparatus 4910 may include at least one cooperative robot or an industrial robot, although it is not limited thereto.

For example, the robot apparatus 4910 may be controlled to dismantle the upper cover of the battery. After the cover is removed, the battery can be transported to another chamber for a subsequent process using the transport device. **In** addition, the robot apparatus 4910 may be controlled to dismantle at least one module of the battery from which the cover is dismantled. **In** addition, the robot apparatus 4910 may be controlled to dismantle at least one cell of the battery from which the module is dismantled. In this case, the robot apparatus 4910 may be controlled to replace the module or cell with an end effector suitable for dismantling. The dismantled components can then be loaded onto the transport device, which moves these components outside the working chamber.

The method for dismantling battery components (e.g., covers, modules, cells) using the robot apparatus will be omitted because they are described above.

The method according to the embodiment may be implemented in the form of program instructions which can be executable through various computer means and recorded in a computer-readable medium. The computer readable medium may include program instructions, data files, data structures, etc., alone or in combination thereof. The program instructions recorded in the medium may be specially designed and configured for the embodiment or may be known and usable to those skilled in the art of computer software. Examples of computer-readable recording media include magnetic media such as hard disks, floppy disks, and magnetic tapes, optical media such as CD-ROMs and DVDs, magneto-optical media such as floptical disks, and hardware devices specially configured to store and perform program instructions such as ROMs, RAMs, and flash memories. Program instructions can include machine language codes such as those made by a compiler, as well as high-level language codes that can be executed by a computer using an interpreter. The hardware device described above may be configured to operate as one or more software modules to perform the operations of the embodiment, and vice versa.

Although the present disclosure is described with specific embodiments and drawings, various modifications and variations may be made by those skilled in the art. For example, appropriate results may be achieved even if the described techniques are performed in a different order or manner, and/or components such as the described system, structure, apparatus, and circuit are combined, combined in a different way from the described method, or substituted in a different form or replaced or substituted by other components or equivalents.

Therefore, other implementations, other embodiments, and equivalents to the claims are also within the scope of the claims described below.

## Claims

1. A method for operating a robot system that controls the operation of at least one robot apparatus implemented to perform a task based on a control signal, the method comprises:
receiving, by at least one processor in the robot system, a control signal which indicates to dismantle a first component of a battery;
obtaining sensing data associated with the battery from at least one sensor;
identifying a predetermined point on the battery based on sensing data;
estimating a pose of the battery based on a locational relationship between the identified predetermined point and the at least one robot apparatus;
adjusting a position of the at least one robot apparatus or the battery such that the locational relationship between the predetermined point and the at least one robot apparatus satisfies a predetermined criterion;
identifying, based on sensing data, a position of at least one of a plurality of fastening members for securing the first component;
determining a dismantling sequence for the plurality of fastening members, and identifying a position of a first fastening member among the plurality of fastening to set the first fastening member to a first target location, wherein if the first target location is not located within a work area of the at least one robot apparatus, the position of the battery is adjusted so that the first target location is located within the work area;
determining a first trajectory for a first end effector to reach a first location corresponding to the first target location;
controlling the first end effector to perform a first task of dismantling the first fastening member from the battery at the first location;
setting a second target location based on sensing data and determining a second trajectory for a second end effector to reach a second location corresponding to the second target location; and
controlling the second end effector to perform a second task of dismantling the first component at the second location.

2. The method of claim 1, wherein the first target location is determined by identifying, based on sensing data, at least one of a position coordinate of the first fastening member, a direction and a distance to the first fastening member.

3. The method of claim 1, further comprising:
identifying, by the at least one processor, a position of the plurality of fastening members based on sensing data; and
selecting the first fastening member of the plurality of fastening members based on predetermined criteria.

4. The method of claim 1, wherein the first trajectory is determined by inputting the sensing data into an artificial intelligence model and obtaining a set of dynamic parameters for reaching the first location from at least one layer of the artificial intelligence model.

5. The method of claim 1, wherein the operation of controlling the first task to be performed further comprising:
determining whether to perform the first task based on a first condition, the first condition being set based on a distance or orientation between the first end effector and the first fastening member.

6. The method of claim 1, wherein the first task comprises at least one unit action for dismantling the first fastening member and the at least one unit action comprises an operation of rotating the first end effector to dismantle the first fastening member.

7. The method of claim 1, further comprising:
identifying, by the at least one processor, based on the sensing data, whether all fastening members for securing the first component to the battery have been dismantled.

8. The method of claim 7, further comprising:
controlling, by the at least one processor, the at least one robot apparatus to release the first end effector and mount the second end effector.

9. The method of claim 1, wherein the first component comprises a cover.

10. The method of claim 1, wherein the first component comprises a module of battery.

11. A robot system which controls the operation of at least one robot apparatus implemented to perform a task based on a control signal, comprising:
a memory; and
at least one processor electronically connected to the memory;
wherein the at least one processor configured to:
receive a control signal indicating that a first component of a battery is to be dismantled;
obtain sensing data associated with the battery from at least one sensor; identify a location of a first fastening member fixing the first component based on the sensing data and set the location as a first target location;
determine a first trajectory for a first end effector to reach a first location corresponding to the first target location;
control the first end effector to perform a fist task of dismantling the first fastening member from the battery at the first location;
set a second target location based on the sensing data and determine a second trajectory for a second end effector to reach a second location corresponding to the second target location; and
control the second end effector to perform a second task of disconnecting the first component at the second location.

12. The system of claim 11, wherein the first target location is determined by identifying, based on sensing data, at least one of a position coordinate of the first fastening member, a direction and a distance to the first fastening member.

13. The system of claim 11, wherein the at least one processor is further configured to:
identify a position of the plurality of fastening members based on sensing data; and
select the first fastening member of the plurality of fastening members based on predetermined criteria.

14. The system of claim 11, wherein the first trajectory is determined by inputting the sensing data into an artificial intelligence model and obtaining a set of dynamic parameters for reaching the first location from at least one layer of the artificial intelligence model.

15. A non-transitory computer readable storage medium storing a computer program executed to perform one of the methods of claims 1 to 10.
